# FASCICULE DE BREVET EUROPEEN

(11) **EP 3 082 131 B1**
(45) Date de publication et mention de la délivrance du brevet: **23.08.2017**
(21) Numéro de dépôt: 16164791.2
(22) Date de dépôt: 12.04.2016
(51) Int. Cl.: G21C 7/14, G21C 7/20, G21C 7/08, G21C 1/03

(54) **DISPOSITIF DE MANUTENTION DE BARRE ABSORBANTE DE CONTRÔLE D'UN RÉACTEUR NUCLÉAIRE**
VORRICHTUNG ZUR HANDHABUNG EINES KONTROLLSTABES EINES KERNREAKTORS
DEVICE FOR HANDLING A CONTROL ROD OF A NUCLEAR REACTOR

(30) Priorité: 14.04.2015 FR 1553250
(43) Date de publication de la demande: 19.10.2016
(73) Titulaire: Comex Nucléaire, 13273 Marseille Cedex 9 (FR); Commissariat à l'Energie Atomique et aux Energies Alternatives, 75015 Paris (FR)
(72) Inventeur: ARLAUD, Jean-Luc, 13350 CHARLEVAL (FR); CYPRES, Daniel, 84240 LA TOUR D'AIGUES (FR); ROBERT, Adrien, 13490 JOUQUES (FR)
(74) Mandataire: Domange, Maxime

(56) Documents cités:
- WO-A1-2007/055645
- FR-A1- 2 455 336
- FR-A1- 2 995 437
- JP-A- 2006 145 233
- US-A- 2 837 477
- US-A- 4 487 739
- US-A- 4 618 471

## Description

La présente invention concerne un dispositif de manutention de barre absorbante chargée du contrôle de la puissance d'un réacteur nucléaire, de préférence de type à neutrons rapides (« RNR »), spécifiquement refroidi au sodium.

De manière générale, dans un réacteur nucléaire, le contrôle permanent de la réaction en chaîne est assuré grâce à des barres absorbantes en matériaux neutrophages qui permettent de contrôler la puissance neutronique du réacteur, par exemple, un matériau à base de bore. Ces barres absorbantes sont aussi dénommées "barres de commande" ou "barres de contrôle". Ces barres absorbantes sont disposées verticalement aptes à être déplacées en translation verticale dans des fourreaux entre les barres de combustibles. Ces barres absorbantes peuvent être remontées (extraites) ou descendues en fonction du flux neutronique recherché. Elles permettent ainsi de piloter le réacteur. Plus précisément, les barres absorbantes sont logées dans des fourreaux à section de forme géométrique identique aux assemblages combustibles (notamment de forme hexagonale) de manière à constituer, ensemble, un faisceau dense constituant le coeur du réacteur. La puissance des assemblages combustibles est nulle lorsque les barres absorbantes sont dans leurs logements ; et, elle est régulée, de puissance nulle à puissance maximale, en fonction de la hauteur d'extraction des barres absorbantes, positionnées hors de leurs logements. Un exemple d'un tel dispositif de barre de contrôle est décrit dans le document WO 2014/037901.

Les réacteurs à neutrons rapides (« RNR ») ont été conçus pour utiliser la matière fissile (l'uranium et le plutonium) comme combustible nucléaire, plus complètement que dans les réacteurs à neutrons thermiques. Le fluide caloporteur peut être un métal liquide, tel le sodium ou un gaz tel que l'hélium.

La présente invention concerne plus particulièrement un procédé de manutention de barre absorbante servant au contrôle du flux neutronique émis par les assemblages combustibles d'un réacteur nucléaire du type réacteur à neutrons rapides refroidi au sodium (« RNR-Na »), par translation relative d'une dite barre absorbante par rapport à son fourreau, lui-même disposé au sein des barres de combustibles.

Dénommée usuellement « mécanisme de commande de barre » dans le domaine concerné, les fonctions attendues d'un dispositif de manutention de barre absorbante sont de :
- Maintenir à une position donnée la barre absorbante ;
- Réaliser l'insertion ou l'extraction de la barre absorbante de son logement en forme de fourreau parmi les assemblages combustibles constitutifs du coeur du réacteur ;
- Faire chuter la barre absorbante dans son logement en cas de demande d'arrêt d'urgence du réacteur.

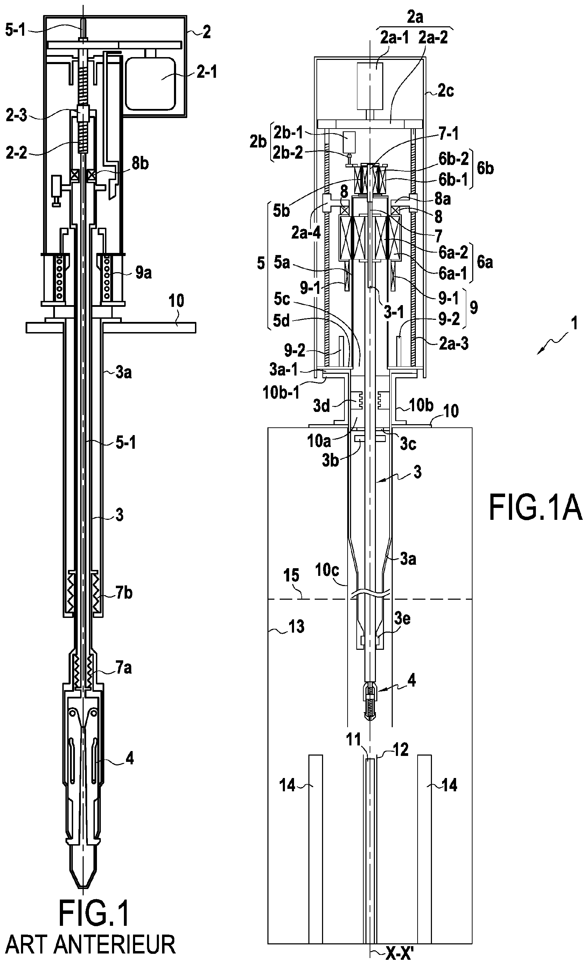

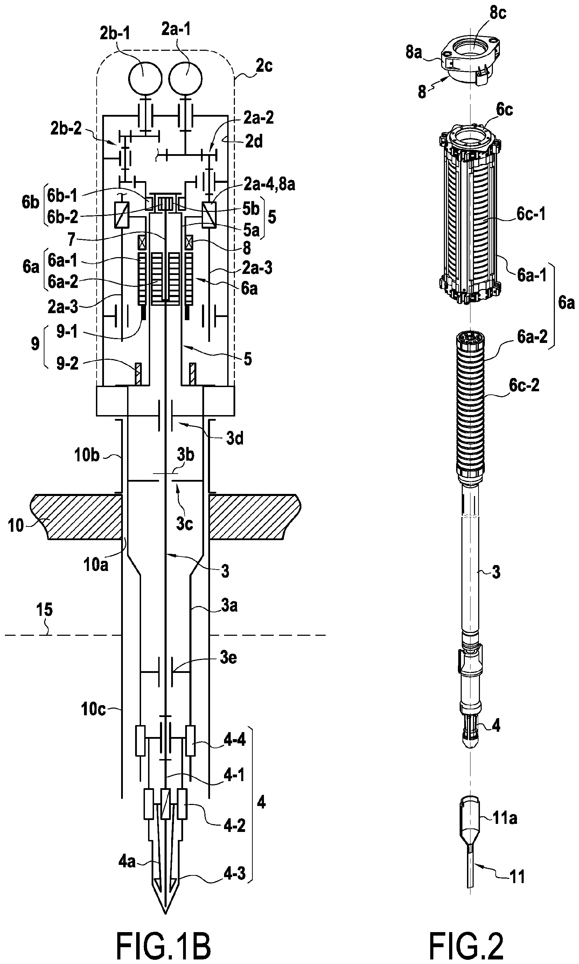

Les différents types de dispositifs de manutention de barres absorbantes antérieurement réalisés ou existants sur les réacteurs en exploitation présentent sensiblement la même conception. Ils comprennent, comme illustré sur la figure 1:
- un compartiment supérieur de motorisation 2 posé sur la dalle de fermeture 10 de la cuve du réacteur, renfermant la partie supérieure d'une tige communément nommée tige de commande de barre 3, le dit compartiment 2 renfermant des moyens motorisés 2-1 de transmission mécanique 2-2, 2-3 et de commande de déplacement de type, soit pignon/crémaillère, soit vis-écrou, et
- la dite tige de commande de barre 3 qui fait office de liaison physique entre les dits moyens motorisés 2-1, commandant les déplacements en translation de la dite tige de commande à son extrémité supérieure et un dispositif de préhension 4 de barre absorbante ou préhenseur à son extrémité inférieure, et
- le dit préhenseur 4 étant apte à saisir l'extrémité supérieure d'une barre absorbante 11 (représentée figure 1A) disposée dans la prolongation de et en alignement avec la tige de commande 3, et
- une seconde tige 5-1 de commande de préhenseur disposée dans une cavité centrale de la tige de commande de barre, laquelle seconde tige de commande de préhenseur pilotée par des moyens motorisés au sein dudit compartiment de motorisation 2 commandant par ses déplacements en translation verticale et indépendant de la tige de commande de barre 3, les opérations d'ouverture/fermeture du préhenseur tels que des doigts de grappin, et
- un fourreau de guidage 3a traversant la dalle de fermeture 10 de la cuve du réacteur et s'étendant au sein de la dite cuve, ledit fourreau de guidage renfermant la partie inférieure de la tige de commande de barre 3 s'étendant dessous la dalle de fermeture, et
- des premiers moyens de fermeture étanche souples 7b en forme de soufflets métalliques fermant l'espace entre le dit fourreau de guidage 3a et la dite tige de commande de barre 3 en autorisant la translation de la dite tige de commande barre au sein dudit fourreau de guidage, et
- des seconds moyens de fermeture étanche souples 7a en forme de soufflets métalliques fermant l'espace entre ladite tige de commande de barre 3 et la seconde tige de commande 5-1 de préhenseur en autorisant la translation de la dite tige de commande de préhenseur 5-1 au sein de la tige de commande de barre 3.

Comme la tige de commande de barre, la seconde tige de commande de préhenseur remonte jusqu'au compartiment de motorisation 2.

Les soufflets métalliques 7a, 7b protègent contre les aérosols de sodium résultant de l'évaporation du sodium liquide à haute température contenu dans la cuve réacteur, les moyens de motorisation et autres éléments mécaniques coopérant en déplacements relatifs du dispositif de manutention que constituent la partie mobile du dispositif de manutention de barre au sein de la cuve et au sein du compartiment de motorisation au-dessus de la cuve.

En l'absence des dits soufflets de fermeture souple, les aérosols de sodium provoqueraient une augmentation des frictions entre éléments mécaniques en déplacements relatifs, et se fixeraient sous forme de dépôts solides sur les parties « froides » bloquant leurs fonctionnements.

Le dispositif de manutention de barre dispose en outre de :
- un dispositif d'arrêt automatique rapide 8b du réacteur par chute gravitaire de l'équipement mobile incluant la chute de la tige de commande de barre 3 et de la barre absorbante 11 qui lui est attachée ; laquelle chute peut être opérée par la mise hors tension d'un électroaimant de maintien magnétique 8b de deux pièces métalliques entre elles (dont l'une positionnée sur la partie mobile), et
- un dispositif d'amortissement 9a de la chute gravitaire de la partie mobile. Cet amortisseur est généralement de technologie à gaz ou à huile, et
- un dispositif d'injection de gaz d'argon au sein du compartiment supérieur 2 servant de barrage aux aérosols de sodium (non représenté sur la Figure 1).

L'extraction de la barre absorbante 11 de son fourreau 12, par translation verticale et contrôlée, par la partie mobile du dispositif de manutention de barre permet de faire varier le niveau de réactivité du coeur. Ce mode de pilotage est le fonctionnement normal.

En situation nécessitant un arrêt rapide de la réactivité du coeur, le dispositif de manutention de barre doit présenter une fonction permettant d'insérer en un temps très court la barre absorbante dans son logement au sein de la cuve, provoquant ainsi de l'anti réactivité nécessaire à l'arrêt du réacteur. L'insertion de la barre absorbante dans la position de repli est provoquée par la chute gravitaire de la partie mobile du dispositif de manutention. Cette chute gravitaire est enclenchée par la libération d'un composant de verrouillage 8b permettant la chute des éléments mécaniques de la partie mobile du dispositif avec préhension d'une barre absorbante à son extrémité inférieure. Cette action est secondée par le dispositif amortisseur 9a permettant d'amortir en fin de course l'énergie de la chute gravitaire du mécanisme mobile afin de préserver l'intégrité de la barre absorbante.

L'usage des dispositifs de manutention de barre existants depuis plusieurs décennies a montré un certain nombre de défaillances de fonctionnement mécanique. La présente invention s'attache en particulier au traitement des défauts mécaniques résultant des usures ou ruptures des soufflets métalliques d'étanchéité ayant entrainées des remontées de sodium le long des tiges. Ces fuites sont à l'origine de l'accumulation constatée de dépôts d'aérosols de sodium sur les parties mécaniques en mouvement causant des frottements voire des grippages et blocage des mécanismes requérant des d'opérations de maintenance.

La présente invention vise plus généralement à simplifier la conception générale du dispositif pour en réduire le temps d'opérations de maintenance.

Le but principal de l'invention est donc de renforcer la fiabilité de ces dispositifs de manutention de barre existants dont les défaillances rencontrées sont la conséquence des effets corrosifs des aérosols de sodium s'infiltrant dans les éléments mécaniques en mouvement et créant des blocages mécaniques, causés essentiellement par la rupture des soufflets métalliques.

Les inventeurs ont recherché des solutions d'amélioration des soufflets métalliques d'étanchéité portant sur des formes d'onde plus tolérantes au phénomène de fatigue mécanique, ou sur la mise en place de double enveloppe permettant la détection du percement de la première enveloppe avant rupture de l'étanchéité. Mais ces améliorations ne permettent au final que de retarder l'apparition de la perte d'étanchéité.

C'est pourquoi, la présente invention fournit un nouveau dispositif de manutention de barre comprenant le remplacement des soufflets métalliques par la mise en place :
- d'une barrière de confinement statique séparant la tige de commande de barre en atmosphère d'environnement sodium et l'ensemble des composants d'un compartiment de transmission de mouvement mécanique par contact hors environnement de sodium, et
- des dispositifs d'accouplements magnétiques transmettant à la dite tige de commande de barre un mouvement mécanique sans contact au travers de la dite barrière de confinement, en complément des dispositifs de transmission mécanique de mouvements par contact existants au sein du compartiment de motorisation à l'extérieur de la dite barrière de confinement hors environnement de sodium.

Cette transmission de mouvement implique la mise en oeuvre d'un système d'accouplement magnétique agissant au travers d'une barrière de confinement en matériau amagnétique, en forme de cloche d'étanchéité amagnétique.

Plus précisément, la présente invention fournit un dispositif de manutention de barre absorbante pour le contrôle d'un réacteur nucléaire, de préférence un réacteur à neutrons rapides (« RNR ») refroidi au sodium, comprenant :
- un compartiment supérieur de motorisation posé sur la dalle de fermeture de la cuve du réacteur, renfermant des moyens motorisés de transmission de commande des déplacements d'une première tige dénommée tige de commande de barre,
- la dite tige de commande de barre s'étendant pour sa partie supérieure dans le dit compartiment de motorisation et pour sa partie inférieure dans un fourreau de guidage s'étendant au sein de la dite cuve, traversant une cavité de la dalle de fermeture de la cuve du réacteur, et
- un dispositif de préhension de barre absorbante dénommé préhenseur fixé à l'extrémité inférieure de la dite tige de commande de barre, le dit préhenseur étant apte à saisir l'extrémité supérieure d'une barre absorbante disposée dans la prolongation de et en alignement avec la tige de commande de barre,
caractérisé en ce qu'il comprend :
- une enceinte statique de confinement étanche en matériau amagnétique disposée au sein du dit compartiment supérieur, en forme de cloche comprenant une paroi latérale de révolution, de préférence cylindrique, ouverte à sa base fixée de façon étanche à la dalle de fermeture de la cuve du réacteur autour de la cavité de la dalle de fermeture traversée par le dit fourreau de guidage,
- un premier système d'accouplement magnétique synchrone de transmission de mouvement de translation linéaire sans contact mécanique comprenant :
- un premier composant externe comprenant un bloc d'aimant(s) permanent(s), de préférence constitué d'une alternance d'aimants permanents séparés par des éléments ferromagnétiques doux, ledit bloc étant disposé au sein du dit compartiment supérieur de motorisation à l'extérieur de la dite enceinte de confinement, et apte à être déplacé en translation verticale, et
- un premier composant interne comprenant au moins un élément ferromagnétique doux, disposé au sein de la dite enceinte de confinement, solidaire de la partie supérieure de la dite tige de commande de barre, la force de couplage magnétique du dit premier composant externe et dit premier composant interne permettant lorsque le premier composant externe est déplacé en translation verticale que le dit premier composant interne et la tige de commande de barre suivent un déplacement en dite translation verticale,
- ledit compartiment de motorisation comprenant des premiers moyens mécaniques motorisés de transmission de déplacements en translation dudit premier composant externe dudit premier système d'accouplement magnétique.

On comprend que les dits premiers composants externe et interne sont disposés en vis-à-vis l'un de l'autre de part et d'autre de la paroi latérale de l'enceinte de confinement étanche avec un entrefer réduit permettant leur liaison magnétique.

On se réfère ici par « élément ferromagnétique doux », aux propriétés magnétiques à savoir que la principale propriété de ce matériau est qu'il s'aimante facilement et perd rapidement sa capacité d'aimantation une fois qu'il n'est plus soumis à un champ magnétique, à la différence des matériaux magnétiques durs qui ne démagnétisent pas, notamment ceux à base de terres rares, comme le Néodyme.

Dans un mode de réalisation, les deux dit premier composant interne et dit premier composant externe comprennent chacun une alternance d'aimants permanents séparés par des éléments ferromagnétiques doux. Cette configuration permet d'augmenter la puissance de couplage et réduire les dimensions de l'accouplement.

Plus particulièrement, le dit compartiment supérieur de motorisation renferme un premier moteur, de préférence du type motoréducteur, coopérant avec des premiers moyens mécaniques de transmission de déplacement par contact comprenant un premier train d'engrenage et au moins une vis à rouleaux satellites ou une vis à billes.

La dite enceinte statique de confinement étanche du dispositif selon l'invention permet de confiner l'environnement mécaniquement agressif des aérosols de sodium provenant de la cuve à l'intérieur de la dite enceinte et d'isoler sans risque de fuite les parties mécaniques en mouvements relatifs par contact de la chaine de transmission des mouvements, à l'extérieur de la dite enceinte. Ceci est rendu possible en mettant en oeuvre un dit accouplement magnétique de transmission de mouvement à la tige de commande de barre agissant au travers de la paroi de l'enceinte étanche.

L'intérêt de l'invention réside dans la possibilité à protéger la chaine de transmission de mouvement mécanique par contact en la positionnant hors de l'environnement agressif des aérosols de sodium, tout en garantissant la transmission d'un mouvement mécanique à un unique composant (ici la barre de commande de barre) situé dans l'environnement agressif. En pratique, l'invention permet de d'éliminer les défaillances dues aux aérosols de sodium enregistrées sur les dispositifs existants. Le fait de ne plus avoir de pièces en mouvements relatifs entre-elles par des jeux mécaniques faibles en présence d'aérosols sodium fait disparaitre le risque d'usure et de blocage par friction.

En outre, du fait que tous les composants en déplacements relatifs mécaniques par contact de la chaine de transmission mécanique sont extérieurs à l'environnement d'aérosols de sodium, les risques chimique et nucléaire s'en trouvent réduits pour les opérateurs en situation de maintenance, le besoin de décontamination nucléaire et chimique étant limité à la tige de commande de barre. Cette capacité offerte par les technologies des accouplements magnétiques d'interagir mécaniquement avec un composant dans un milieu agressif au travers d'une paroi/enceinte étanche, est donc particulièrement avantageuse dans le secteur du nucléaire qui cherche en outre à limiter la propagation de toute contamination nucléaire.

L'intérêt des accouplements magnétiques, sans contact et donc sans usure est aussi de réduire considérablement les temps d'intervention pour la maintenance du dispositif, ce qui en augmente la disponibilité.

L'enceinte de confinement rend difficile la mise en action du préhenseur par une tige de commande du préhenseur commandée en translation au travers de la paroi de l'enceinte de confinement de façon différentiée par rapport à la tige de commande de barre. Par ailleurs, le maintien d'une tige de commande du préhenseur ferait persister un risque de présence d'aérosols de sodium dans les jeux de entre deux tiges Ces considérations ont conduit à ce que l'invention implique un nouveau type de préhenseur actionné par un second accouplement magnétique agissant au travers de la barrière de confinement, par mise en rotation d'un arbre de guidage inséré en partie supérieure de la tige de commande de barre.

De préférence, le dispositif de manutention de barre selon l'invention comprend en outre :
- un dit compartiment supérieur de motorisation comprenant des seconds moyens mécaniques motorisés de transmission de déplacements en rotation de la dite tige de commande de barre selon son axe longitudinal; et
- un dit préhenseur apte à être actionné pour saisir ou respectivement libérer l'extrémité de la dite barre de contrôle par rotation de ladite tige de commande de barre selon son axe longitudinal.

Avec la disparition de la tige de commande de pince des dispositifs de manutention de barre existants, les jeux mécaniques de pièces en contact en mouvement relatif à l'intérieur de la dite enceinte disparaissent et ne font pas craindre des dépôts d'aérosols qui seraient la cause de blocages mécaniques.

Plus particulièrement, ledit préhenseur à l'extrémité inférieure de ladite tige de commande forme un grappin comprenant une pluralité de doigts disposés dans la direction de l'axe de la tige de commande de barre en position rétractée et aptes à pivoter ou fléchir pour s'écarter angulairement de l'axe de la tige de commande et/ou s'expanser radialement, de manière réversible, sous l'action de rotation axiale de la tige de commande de barre, pour venir coopérer avec la partie supérieure de la barre absorbante et s'y bloquer pour saisir la barre absorbante.

Plus particulièrement, ledit préhenseur comprend au moins deux parties coopérant l'une dans l'autre en liaison hélicoïdale par vissage avec :
- une première partie filetée solidaire de l'extrémité de la tige de commande de barre, la dite première partie fixe comprenant en aval de sa partie filetée, une zone avec un diamètre élargi de sa section, et
- une deuxième partie taraudée apte à se déplacer en translation par rapport à ladite première partie filetée par vissage de l'une par rapport à l'autre,
- la dite deuxième partie taraudée supportant les dits doigts flexibles lesquels s'écartent radialement lorsqu'ils rencontrent ladite zone de diamètre élargi de ladite première partie filetée du fait de la translation relative des deux parties filetées et taraudée par vissage relatif résultant de la rotation de la tige de commande de barre entraînant la rotation relative de la première partie filetée par rapport à la deuxième partie taraudée.

De préférence, le dispositif comprend une deuxième tige dénommée arbre de guidage, inséré dans une cavité centrale de la partie supérieure de la dite tige de commande de barre, de préférence dans l'axe longitudinal de la paroi latérale de révolution de la dite enceinte de confinement étanche, la dite tige de commande étant apte à coulisser par rapport au dit arbre de guidage lorsqu'elle est actionnée en translation par ledit premier système d'accouplement magnétique, le dit arbre de guidage étant bloqué en translation verticale et apte à être entrainé en rotation autour de son axe longitudinal (XX'), ledit arbre de guidage étant apte à coopérer avec la dite cavité centrale de sorte que la rotation de l'arbre de guidage autour de son axe longitudinal (XX') entraine la rotation de la tige de commande de barre autour de son axe longitudinal (XX').

Ainsi, la rotation de la tige de commande barre résulte de la rotation de l'arbre de guidage.

Plus particulièrement, c'est la forme de la section de l'arbre de guidage qui coopère avec celle de la cavité centrale de la partie supérieure de la dite tige de commande de barre et qui assure à la fois une liaison glissière (déplacement le long de l'axe de l'arbre de guidage) et une liaison pivot (rotation autour de l'axe de l'arbre de guidage), permettant les mouvements en déplacement linéaire relatif de la tige de commande par rapport à l'arbre de guidage et en rotation simultanée de la tige de commande avec l'arbre de guidage, soit une liaison pivot glissant, et ce indépendamment de la position relative de l'accouplement magnétique en translation vis-à-vis de l'arbre de guidage.

De préférence encore, le dispositif de manutention de barre selon l'invention comprend en outre :
- un deuxième système d'accouplement magnétique synchrone de transmission de mouvement de rotation sans contact mécanique comprenant :
- un deuxième composant interne comprenant au moins un élément ferromagnétique doux, disposé au sein de la dite enceinte de confinement étanche, fixe en translation verticale, apte à être déplacé en rotation selon l'axe longitudinal de la dite enceinte, solidaire d'un dit arbre de guidage, et
- un deuxième composant externe comprenant un bloc d'aimant(s) permanent(s), de préférence constitué d'une alternance d'aimants permanents séparés par des éléments ferromagnétiques doux, ledit bloc étant disposé au sein du dit compartiment de motorisation à l'extérieur de la dite enceinte de confinement étanche, et apte à être déplacé en rotation selon l'axe longitudinal de la paroi latérale de révolution de l'enceinte de confinement étanche, et la force de couplage magnétique des dits deuxième composant externe et deuxième composant interne du dit second système d'accouplement magnétique permettant lorsque ledit second composant externe est déplacé en dite rotation que le dit deuxième composant interne, ledit arbre de guidage et la tige de commande de barre suivent un même déplacement en dite rotation selon leur même axe longitudinale,
- ledit compartiment supérieur de motorisation comprenant des seconds moyens mécaniques motorisés de transmission de déplacements en dite rotation du dit deuxième composant externe selon l'axe longitudinal de la paroi latérale de révolution de l'enceinte de confinement étanche, le dit compartiment supérieur renfermant de préférence des moyens mécaniques de transmission de déplacement en rotation de type engrenages à pignons.

Plus particulièrement, les deux dits deuxièmes composants interne et externe sont fixes en translation.

On comprend que les dits deuxièmes composants externe et interne sont disposés en vis-à-vis l'un de l'autre de part et d'autre de la paroi de l'enceinte de confinement étanche avec un entrefer réduit et coaxialement par rapport à l'axe longitudinal de ladite paroi latérale de révolution de l'enceint de confinement étanche.

Les systèmes d'accouplements magnétiques synchrones sont connus de l'homme de l'art. Cette technologie met en application le principe de l'attraction magnétique, c'est-à-dire l'existence d'une force de maintien liée à l'intensité de l'induction magnétique d'un champ magnétique développé par un aimant permanent. La partie inductrice constituée d'un aimant permanent d'un côté de la paroi amagnétique est générateur de lignes de champs venant se refermer sur la partie induite constituée d'une pièce métallique de l'élément ferromagnétique doux de l'autre côté de la paroi amagnétique. La technologie des accouplements magnétiques permet de transmettre des mouvements sans contact au travers d'une paroi amagnétique dès lors que l'entrefer entre l'aimant permanent et l'élément ferromagnétique reste faible. Les accouplements magnétiques peuvent s'employer pour des entrainements en translation linéaire ou des entrainements en rotation. Les deux éléments séparés par la cloche étanche amagnétique sont aussi dénommés partie « menante » ou « inductrice » pour la pièce embarquant les aimants permanents et« partie menée » ou « induite » pour la pièce liée magnétiquement.

Plus particulièrement, le premier système d'accouplement magnétique de transmission de mouvement de translation linéaire comprend :
- un premier composant externe constitué d'un aimant disposé coaxialement à la dite paroi latérale de révolution de l'enceinte, sous forme d'un empilement de couronnes d'aimants permanents, de préférence en alliage néodyme-fer-bore, séparées par des couronnes de plaques en fer doux, et
- un premier composant interne disposé coaxialement à la dite paroi latérale de révolution de l'enceinte et constitué d'au moins un empilement de couronnes de fer doux fixées en partie supérieure de la tige de commande.

Des couronnes d'aimants permanents et d'éléments en fer doux peuvent être répartis en alternance sur les deux composants interne et externe. Cette disposition permet d'augmenter la puissance de couplage et réduire les dimensions de l'accouplement.

De même, le second système d'accouplement magnétique de transmission de mouvement en rotation comprend :
- un deuxième composant externe constitué d'un bloc d'aimant permanent annulaire disposé coaxialement à la dite paroi latérale de révolution de l'enceinte, de préférence un alliage de terre rare néodyme-fer-bore, et
- un deuxième composant interne constitué d'au moins un élément de fer doux fixé en partie supérieure dudit arbre de guidage disposé coaxialement à ladite paroi latérale de révolution de l'enceinte.

De façon connue, le terme « fer doux » désigne à la fois le fer et l'acier doux.

Plus particulièrement, le dit second système d'accouplement magnétique de transmission de mouvement en rotation comprend :
- un deuxième composant externe constitué d'un assemblage d'éléments d'aimants permanents séparés par des éléments de fer doux disposés côte à côte à même distance radiale de la dite paroi latérale de révolution de l'enceinte, le contour de chacun des dits éléments présentant chacun une forme de section d'arc de cercle, de préférence de même section d'arc de cercle, et
- un deuxième composant interne constitué d'un assemblage d'éléments de fer doux disposés côte à côte à même distance radiale de l'axe longitudinale (XX') de la partie supérieure dudit arbre de guidage, le contour de chacun des dits éléments présentant chacun une forme de même section d'arc de cercle, de préférence de même section d'arc de cercle.

De préférence, le dispositif de manutention de barre selon l'invention comprend en outre un dispositif d'arrêt d'urgence du réacteur comprenant un composant dénommé ventouse magnétique comprenant un aimant permanent combiné à une bobine électromagnétique au sein du dit compartiment supérieur de motorisation à l'extérieur de la dite enceinte de confinement étanche de sorte que :
- ladite ventouse est solidaire d'un support de ventouse, ledit compartiment supérieur de motorisation comprenant des premiers moyens mécaniques motorisés de transmission des déplacements en translation dudit support de ventouse ;
- l'activation électrique de ladite bobine électromagnétique modifie le champ magnétique généré par l'aimant de la ventouse magnétique lequel se referme sur une pièce métallique du dit premier composant externe du premier système d'accouplement magnétique et crée une liaison par collage magnétique entre la dite ventouse et le premier composant externe du premier système d'accouplement magnétique assurant ainsi le déplacement en translation du dit premier composant externe par déplacement du dit support de ventouse , et
- l'absence d'activation électrique de la dite bobine électromagnétique rétabli le champ magnétique de l'aimant de la dite ventouse lequel champ ne se dirige plus sur une pièce métallique du premier composant externe du premier système d'accouplement magnétique et autorise ainsi la chute gravitaire dudit premier système d'accouplement magnétique et donc la chute gravitaire de ladite barre absorbante lorsque celle-ci est saisie par le dit préhenseur à l'extrémité inférieure de la tige de commande de barre.

La ventouse magnétique à la particularité d'intégrer une bobine électromagnétique, non pas pour réaliser la force de collage magnétique comme dans la technique antérieure, mais pour venir modifier l'orientation du flux magnétique généré par un aimant permanent. Ainsi la ventouse magnétique possède 2 états -ON et OFF - qui sont la conséquence de l'alimentation ou pas de la bobine électromagnétique. Dans le cas où la bobine électromagnétique est active, le champ généré par l'aimant permanent inducteur se referme sur une pièce métallique de l'équipage mobile à soutenir constitué par l'ensemble des composants entrainés en déplacement axial pour la manutention de la barre absorbante incluant la tige de commande de barre, le préhenseur et la barre absorbante de contrôle. A l'inverse le champ magnétique de l'inducteur se dirige sur une autre partie du mécanisme pour annuler le maintien et provoquer le lâché de barre.

Cette ventouse magnétique permet de mettre en oeuvre une bobine électromagnétique moins puissante que dans la technique antérieure dans laquelle seule une bobine électromagnétique (non couplée à un aimant) assurait le dispositif d'arrêt automatique du réacteur. Ce montage permet en outre que la partie mobile en chute gravitaire lors de la désactivation de la bobine électromagnétique soit relativement allégée puisque les moyens de transmission commandant des déplacements en translation dudit support de ventouse ne sont pas entrainés dans la chute mais restent fixes.

L'absorption de l'énergie de chute de la partie mobile du mécanisme en cas de demande urgente d'arrêt du réacteur est effectuée dans la présente invention par un amortisseur magnétique à courant de Foucault.

De préférence encore, le dispositif de manutention de barre selon l'invention comprend un dispositif amortisseur de chute constituant un amortisseur magnétique comprenant un premier élément d'amortisseur constitué d'un aimant permanent apte à coulisser en déplacement relatif en vis-à-vis d'un deuxième élément d'amortisseur en matériaux de faible résistance électrique de préférence en cuivre , disposé dessous le premier élément d'amortisseur, le déplacement relatif dudit premier élément d'amortisseur par rapport audit deuxième élément d'amortisseur intervenant lorsque le dispositif d'arrêt automatique du réacteur autorise la chute gravitaire de barre absorbante.

Le champ magnétique du premier élément d'amortisseur en déplacement relatif par rapport au deuxième élément d'amortisseur est ainsi apte à induire un courant de Foucault ce dernier générant une force de Laplace s'opposant audit déplacement relatif du premier élément d'amortisseur par rapport au deuxième élément d'amortisseur.

Le principe de fonctionnement du freinage magnétique est connu de l'homme de l'art comme résultant de la variation d'un flux magnétique, à l'origine constant, modifié par le déplacement relatif d'une masse magnétique et d'une masse de faible résistance électrique, le champ magnétique de la masse magnétique (premier élément d'amortisseur) en déplacement relatif par rapport à la masse de faible résistance électrique (deuxième élément d'amortisseur) étant apte à induire une force électromotrice dans la masse de faible résistance électrique (deuxième élément d'amortisseur) générant à son tour un courant de Foucault ce dernier générant un champ magnétique et une force de Laplace s'opposant audit déplacement relatif de la masse magnétique (premier élément d'amortisseur) par rapport à la masse de faible résistance électrique (deuxième élément d'amortisseur).

Plus particulièrement, le dispositif amortisseur de chute constituant un amortisseur magnétique comprend:
- un deuxième élément d'amortisseur en forme de virole, fixe, disposée coaxialement en partie basse du dit compartiment supérieur à l'extérieur de la dite enceinte, et
- un premier élément d'amortisseur constitué d'un aimant permanent fixé coaxialement audit premier composant externe dudit premier système d'accouplement magnétique, apte à coulisser coaxialement à l'intérieur dudit deuxième élément d'amortisseur en forme de virole dans l'espace annulaire entre la dite virole et la paroi latérale cylindrique de la dite enceinte, lorsque le dit dispositif d'arrêt automatique du réacteur autorise le lâcher dudit premier composant dudit premier système d'accouplement magnétique.

Ici la masse conductrice, de la forme d'une virole en cuivre, est fixe en partie basse du compartiment supérieur à l'extérieur de la cloche de confinement et constitue l'induit de l'amortisseur. La masse magnétique, de préférence un aimant permanent en alliage de terres rares (néodyme-fer-bore) est la pièce inductrice qui crée le champ magnétique constant et qui se déplace devant l'induit.

Dans ce mode de réalisation, l'inducteur est positionné sur l'équipement mobile. Dans une autre configuration, il peut en être dissocié et positionné solidaire et à proximité de l'induit pour former ensemble une seule et même pièce. Dans ce dernier cas, l'équipage mobile vient percuter l'inducteur au cours de sa chute et provoquer son déplacement relatif par rapport à l'induit.

Ce dispositif amortisseur magnétique remplace avantageusement les dispositifs amortisseurs à gaz fonctionnant sur le principe d'un piston comprimant un volume de gaz poussé vers une sortie calibrée. En effet, l'amortisseur magnétique à courant de Foucault selon la présente invention, présente l'intérêt d'une simplification importante du nombre de pièces mécaniques en jeu. On passe ici d'un mécanisme de type piston pneumatique, à un système à deux éléments (un inducteur magnétique de type aimant permanent, et un matériau de faible résistance électrique) assemblés de manière à coulisser l'un dans l'autre. Mais l'intérêt le plus important est que l'amortisseur reste en permanence opérationnel, sans recourir à une activation. C'est la vitesse de chute de l'inducteur présent sur l'équipement mobile en chute gravitaire qui génère la force de freinage. Cette force de freinage est intrinsèque au déplacement de l'inducteur. Un tel dispositif peut être qualifié de dispositif au fonctionnement passif parce qu'il ne dépend d'aucune condition extérieure ce qui est fortement apprécié au regard des règles de sûreté nucléaire.

La présente invention fournit donc également un procédé de manutention de barre absorbante servant au contrôle du flux neutronique émis par les assemblages combustibles d'un réacteur nucléaire, de préférence du type réacteur à neutrons rapide refroidi au sodium (« RNR-Na), par translation relative d'une barre absorbante par rapport à son fourreau disposé entre des barres de combustibles à l'aide d'un dispositif de manutention selon l'invention.

Plus particulièrement, on arrête automatiquement le réacteur par chute gravitaire libre de la tige de commande de barre et de la barre absorbante qui lui est fixée par ledit préhenseur, en coupant l'alimentation électrique d'une ventouse magnétique et de préférence un dispositif amortisseur magnétique tel que défini ci-dessous.

D'autres caractéristiques et avantages de la présente invention ressortiront mieux à la lecture de la description qui va suivre, faite de manière illustrative et non limitative, en référence aux dessins annexés suivants.

La figure 1 est une vue en coupe verticale schématique d'un dispositif de manutention de barre absorbante d'un réacteur de type RNR de la technique antérieure;
- La figure 1A est une vue en coupe verticale schématique d'un dispositif de manutention de barre absorbante de contrôle selon la présente invention placée dans une cuve 13 de réacteur contenant une barre absorbante 11 positionnée entre deux assemblages combustibles 14 à titre illustratif,
- La figure 1B est une vue schématique en coupe verticale d'un dispositif de manutention de barre de contrôle selon la présente invention explicitant les moyens de transmission de mouvements mécaniques par contact au sein du compartiment supérieur 2 de motorisation,
- La figure 2 est une vue montrant les différents composants séparés participant à la translation de la tige de commande 3 incluant le premier système d'accouplement magnétique synchrone 6a ainsi que le dispositif d'arrêt automatique de type ventouse magnétique 8,
- La figure 3 est une vue montrant les différents composants participant à la fonction de commande de saisie de la barre absorbante 11 par le dispositif de manutention selon la présente invention incluant le deuxième système d'accouplement magnétique synchrone 6b,
- Les figures 4A et 4B sont des vues en coupe verticale médiane (fig.4A) et vue de dessus en coupe transversale (fig.4B) montrant les différents éléments du deuxième système d'accouplement magnétique synchrone 6b assemblés pour commander la rotation de l'arbre de guidage 7 au sein de l'enceinte de confinement étanche 5,
- Les figures 5A et 5B montrent les différents composants participants à la fonction de lâcher automatique de la tige de commande 3 pour l'arrêt automatique du réacteur comprenant les différents composants d'un amortisseur magnétique 9 séparés (figure 5A) et assemblés en mode de fonctionnement normal (figure 5B) et en mode d'arrêt automatique du réacteur après chute gravitaire (figure 5C),
- La figure 6 montre les différentes parties d'un dispositif de préhension selon l'invention,
- Les figures 6A et 6B montrent le dispositif de préhension 4 de la figure 6 avec ses doigts 4a de préhension en position rétractées dans laquelle la partie supérieure 11a de la barre absorbante 11 n'est pas saisie (figure 6A) et en position d'expansion dans laquelle la partie supérieure 11a de la barre absorbante 11 est saisie en position de blocage par le dispositif de préhension 4 (figure 6B),
- La figure 7 montre une ventouse magnétique 8 selon la présente invention, et
- Les figures 8A à 8C représentent différentes positions relatives de la tige de commande 3 et du dispositif de préhension 4 par rapport à la barre absorbante de contrôle 11.

Sur la figure 1A, on a représenté schématiquement un dispositif de manutention 1 de barre de contrôle selon la présente invention, disposé sur la dalle de fermeture 10 d'une cuve 13 de réacteur dans laquelle on a représenté uniquement deux assemblages combustibles 14 avec une barre absorbante de contrôle 11 dans son logement cylindrique 12 au fond de la cuve. Le dispositif de manutention de commande de barre 1, selon la présente invention, présente un axe longitudinal vertical XX' disposé dans l'axe longitudinal du logement de barre ou fourreau 12.

Le dispositif de manutention et commande de barre 1 comprend une tige de commande de barre 3 disposée dans l'axe longitudinal vertical XX' au sein d'un fourreau de guidage 3a comprenant des portions cylindriques à sections circulaires s'étendant au sein de ladite cuve, au-dessus du logement 12 de la barre absorbante 11.

La tige de commande de barre 3 comprend un dispositif de préhension 4 sous forme de grappin à l'extrémité inférieure de la tige de commande 3 apte à saisir l'extrémité supérieure 11a de la barre absorbante 11.

Le dispositif de manutention 1 comprend des moyens de déplacement en translation verticale de la tige de commande de barre 3 décrits ci-après. La translation verticale de la tige de commande 3 est destinée à permettre l'insertion et l'extraction de la barre de contrôle 11 par rapport à son logement 12 lorsque l'extrémité supérieure 11a de la barre de contrôle 11 est saisie par le dispositif de préhension 4.

Le fourreau de guidage 3a est surmonté d'une bride de fixation 3a-1 autour de son extrémité supérieure ouverte, ladite bride 3a-1 permettant sa fixation sur la bride supérieure 10b-1 d'un manchon de fixation 10b reposant sur la dalle 10 autour d'une cavité 10a de la dalle de fermeture 10 de la cuve 13 du réacteur, ladite cavité 10a étant traversée par le fourreau de guidage 3a.

Un compartiment supérieur 2 est disposé sur la dalle 10 en recouvrant la dite cavité 10a et le fourreau de guidage 3a, ce compartiment supérieur 2 renferme une enceinte statique de confinement étanche 5 en matériau amagnétique tel qu'un acier inoxydable du type 316L, en forme de cloche comprenant une surface de révolution à parois cylindriques 5a et 5b de même axe de révolution que l'axe longitudinal XX' du compartiment supérieur 2 et du fourreau de guidage 3a. La cloche de confinement étanche 5 est ouverte à sa base 5c au niveau de l'ouverture supérieure du fourreau de guidage et en vis-à-vis de l'ouverture 10a de la cavité au sein de la dalle de fermeture 10. La cloche 5 comprend une bride périphérique 5d à son extrémité inférieure, autour de sa base ouverte 5c, servant à faire une fixation étanche sur la bride supérieure de fixation 3a-1 du fourreau de guidage 3a. Le compartiment supérieur 2 est délimité par une paroi formant un carter 2c, fermée à son extrémité inférieure par la bride supérieure de fixation 3a-1 du dit fourreau de guidage 3a et/ou la bride inférieure 5d de la cloche 5 et/ou la bride supérieure de fixation 10b-1 du manchon 10b. L'étanchéité de la fixation de la cloche par-dessus la dalle de fermeture 10 se fait à l'aide de joints toriques. Elle permet d'isoler l'environnement de la zone du compartiment 2 à l'extérieur de la cloche 5 vis-à-vis de l'atmosphère intérieure de la cloche 5.

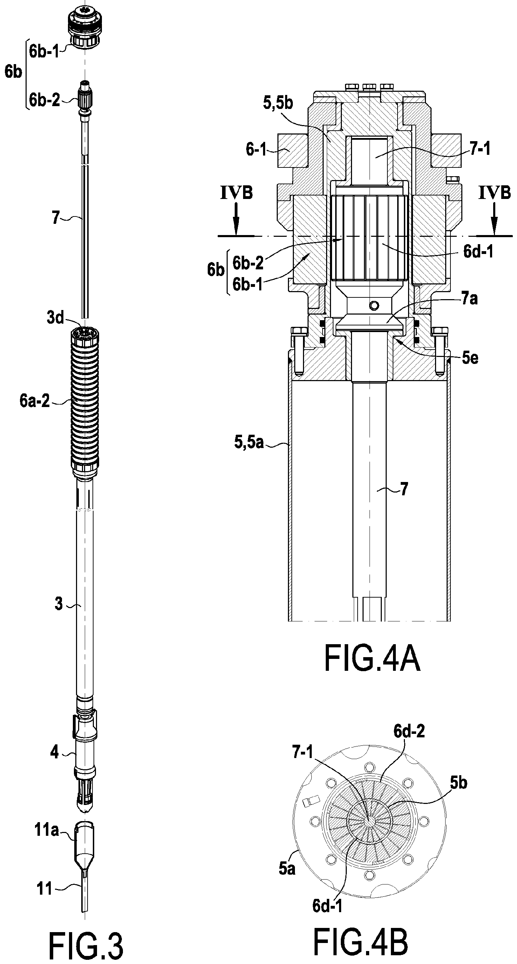

La partie supérieure de la tige de commande de barre 3 contenue dans la cloche 5 comporte une cavité centrale 3-1 au sein de laquelle s'étend une tige dénommée arbre de guidage 7. La partie supérieure 7-1 de l'arbre de guidage 7 est solidaire du composant interne du second accouplement magnétique 6-b2 (décrit ci-après) au sein d'une partie supérieure de la cloche 5 à paroi cylindrique 5b de plus petit diamètre au-dessus de la tige de commande de barre 3. L'arbre de guidage 7 comprend dans sa partie supérieure 7-1 au-dessus de la cavité 3-1 une partie en saillie ou renflement 7a (figure 4A) coopérant avec un palier de guidage 5e de la paroi cylindrique de la cloche 5 de manière à maintenir l'arbre de guidage à hauteur constante et autorisant uniquement une rotation de l'arbre de guidage 7 autour de son axe longitudinal XX'. Ladite cavité centrale 3-1 de la partie supérieure de la tige de commande 3 s'étend sur une hauteur suffisante pour permettre le coulissement de la tige de commande 3 le long de l'arbre de guidage 7 permettant l'insertion ou extraction de la barre de commande 11 de son logement 12 pour piloter la réactivité du réacteur. En pratique, cette distance de débattement de la barre de contrôle 11 entre l'arrêt du réacteur lorsque la barre 11 est entièrement insérée au sein de ce logement 12 et l'extraction partielle de la barre 11 en dehors du logement 12 et au-dessus de celui-ci correspond, dans la barre absorbante, à la hauteur de la partie contenant la matière radioactive (dit zone fissile).

L'actionnement en ouverture et respectivement en fermeture du dispositif de préhension 4 pour saisir et respectivement libérer l'extrémité supérieure 11a de la barre 11 se fait par rotation de la tige de commande de barre 3 selon son axe longitudinal vertical XX' dans un sens et respectivement dans le sens inverse.

La coopération entre l'arbre de guidage 7 et la cavité 3-1 de la tige 3 est en liaison pivot glissant. Pour ce faire, l'arbre de guidage 7 présente une section transversale de forme carrée de même que la section transversale de la cavité centrale de la partie supérieure de la tige de commande 3 au sein de laquelle l'arbre de guidage 7 est insérée de manière à ce que la rotation de l'arbre de guidage 7 selon son axe longitudinal vertical XX' entraine la rotation de la tige de commande de barre 3.

Le compartiment supérieur 2 renferme deux systèmes d'accouplements magnétiques synchrones 6a et 6b. Le premier système d'accouplement magnétique synchrone 6a est apte à transmettre un mouvement de translation linéaire verticale à la tige de commande de barre 3. Le deuxième système d'accouplement magnétique synchrone 6b est apte à transmettre un mouvement de rotation axial selon l'axe longitudinal vertical XX' du dispositif à l'arbre de guidage 7.

Le premier système d'accouplement magnétique 6a comprend un premier composant externe 6a-1 comprenant un premier bloc d'aimants permanents constituant la partie « inducteur » ou la partie « menante » du premier système d'accouplement magnétique. Ce bloc d'aimants permanents est constitué d'un empilement coaxial de couronnes 6c-1 (figure 2) comprenant des couronnes d'aimants permanents en néodyme-fer-bore, séparés par des couronnes de plaques en fer doux formant un bloc d'aimants permanents perforé axialement comme montré sur la figure 2. Lesdites couronnes 6c-1 sont traversées par, et entourent coaxialement, la paroi cylindrique principale 5a de la cloche étanche 5 et sont apte à être déplacées en translation verticale le long et autour de ladite paroi cylindrique 5a.

Le premier système d'accouplement magnétique synchrone 6a comprend un premier composant interne 6a-2 constituant la partie « menée » ou « induite » aussi constituée d'un empilement de couronnes de fer doux 6c-2 constituant un bloc 6a-2 perforé axialement fixé à et autour de la partie supérieure de la tige de commande de barre 3 disposée coaxialement dans et traversant la perforation axiale dudit bloc 6a-2 d'empilement de couronnes de fer doux.

Le premier composant externe 6a-1 et le premier composant interne 6a-2 sont disposés coaxialement à même hauteur en vis-à-vis de part et d'autre de la paroi cylindrique 5a de la cloche étanche 5 avec un entrefer réduit et sont liés magnétiquement, de sorte que lorsque la partie menante 6a-1 se déplace en translation verticale, la partie menée 6a-2 suit ce mouvement de translation.

Du fait que le premier composant interne 6a-2, supporte la charge de la tige de commande de barre 3 et, le cas échéant, de la barre absorbante de contrôle 11, un décalage axial peut être observé en rapport avec la masse de la charge supportée selon la raideur de l'accouplement. Mais, le dimensionnement de l'accouplement magnétique est réalisé de sorte que ce décalage reste minimal et dans la partie linéaire de la courbe de décalage par rapport à la charge, et ne modifie pas la rigidité de l'accouplement, de façon connue de l'homme de l'art.

Plus particulièrement, la charge est de l'ordre de 300 à 400 kg pour l'équipement mobile constitué par l'ensemble des composants entrainés en déplacement axial pour la manutention de la barre absorbante incluant la tige de commande de barre 3, le préhenseur 4 et la barre absorbante de contrôle 11. Tous ces éléments de l'équipement mobile sont translatés sur une hauteur d'environ 1 mètre correspondant à la hauteur d'élévation de la barre absorbante 11 pour la conduite du coeur du réacteur.

En pratique, les empilements des couronnes d'aimant et de fer doux du bloc 6a-1 permettent de réaliser un accouplement magnétique sur une hauteur d'accouplement d'environ 600 mm suffisante pour obtenir une rigidité de décalage de +/- 0.5 mm à +/- 1 mm avec un entrefer de 6 à 7 mm pour une paroi amagnétique de 4 à 5 mm et donc des distances entre la paroi 5a et le premier composant externe 6a-1 et respectivement le premier composant interne 6a-2, inférieures à 1mm.

Le déplacement en translation verticale du premier composant externe 6a-1 et du premier système d'accouplement magnétique synchrone 6a se fait à l'aide de premiers moyens motorisés 2a comprenant un premier moteur 2a-1 coopérant avec des éléments mécaniques de transmission de mouvement par contact comprenant un train d'engrenages 2a-2 comprenant deux vis à rouleaux satellites 2a-3 commandant le déplacement en translation verticale d'un écrou 2a-4 solidaire d'un support métallique 8a. Les deux écrous 2a-4 des systèmes de deux vis à rouleaux 2a-3 sont donc solidaires de la platine 8a support de ventouse 8. Une « vis à rouleaux satellites » est un mécanisme connu de l'homme de l'art assurant la conversion d'un mouvement de rotation d'une vis résultant du premier train d'engrenage en un mouvement de translation d'un écrou par liaison hélicoïdale filetée de la dite vis et du dit écrou.

L'élément dénommé ventouse magnétique 8 engendre une force d'attraction qui la lie magnétiquement au premier composant externe 6a-1 notamment à la plaque de fermeture supérieure 6c (figures 2) de l'empilement de couronnes 6c-1 du bloc d'aimants permanents du premier composant externe 6a-1.

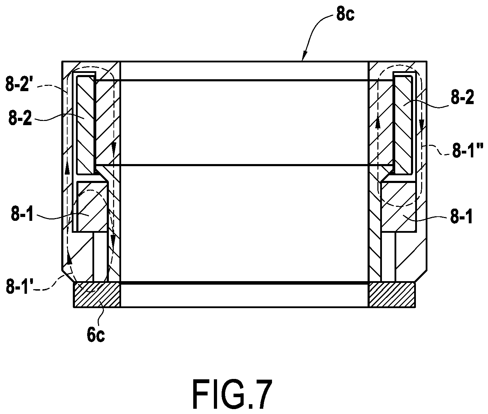

Comme représenté sur la figure 7, la ventouse magnétique 8 comprend un aimant permanent 8-1 qui génère un flux magnétique qui garantit son collage magnétique avec la pièce en acier 6c de l'extrémité supérieure du premier composant externe 6a-1. La ventouse magnétique 8 présente une même forme annulaire avec une perforation axiale 8c disposée coaxialement par rapport au dit premier composant externe 6a-1 pour être disposée autour de la paroi cylindrique 5a de la cloche 5 en vis-à-vis de la partie supérieure 6c en forme de couronne du premier composant externe 6a-1.

La ventouse magnétique 8 est un dispositif qui permet l'arrêt automatique d'urgence du réacteur par déclenchement de l'activation électrique d'une bobine électromagnétique 8-2 couplée au dit aimant permanent 8-1. La bobine électromagnétique 8-2 associée à l'aimant permanent 8-1 a pour fonction de modifier l'orientation du champ magnétique produit par l'aimant permanent 8-1 comme suit. Lorsque la bobine électromagnétique 8-2 est alimentée par un courant électrique, le flux magnétique 8-2' de la bobine électromagnétique 8-2 ainsi généré sert à modifier le flux magnétique 8-1' qui maintient l'aimant permanent 8-1 collé à la plaque métallique 6c de l'extrémité supérieure du premier composant externe 6a-1 laquelle pièce 6c est ainsi soumise à la force d'attraction importante de l'aimant 8-1. Lorsque la bobine électromagnétique 8-2 n'est plus alimentée en courant électrique, le flux magnétique généré par l'aimant permanent 8-1 adopte une direction 8-1" qui ne passe plus par la plaque 6c ce qui provoque la libération du premier composant externe 6a-1. Pour éviter un phénomène de collage par effet de rémanence magnétique entre l'aimant 8-1 et la plaque 6c, des éjecteurs à ressort peuvent être ajoutés entre la ventouse 8 et la plaque de fermeture 6c. Pour les mêmes raisons d'évitement de collage par effet de rémanence magnétique, il est important de positionner un entrefer de l'ordre du millimètre entre l'aimant 8-1 et la plaque 6c.

La ventouse magnétique 8 est donc conforme aux exigences de sécurité nucléaire qui requiert que le mécanisme d'arrêt automatique du réacteur se déclenche en cas de rupture de l'alimentation électrique.

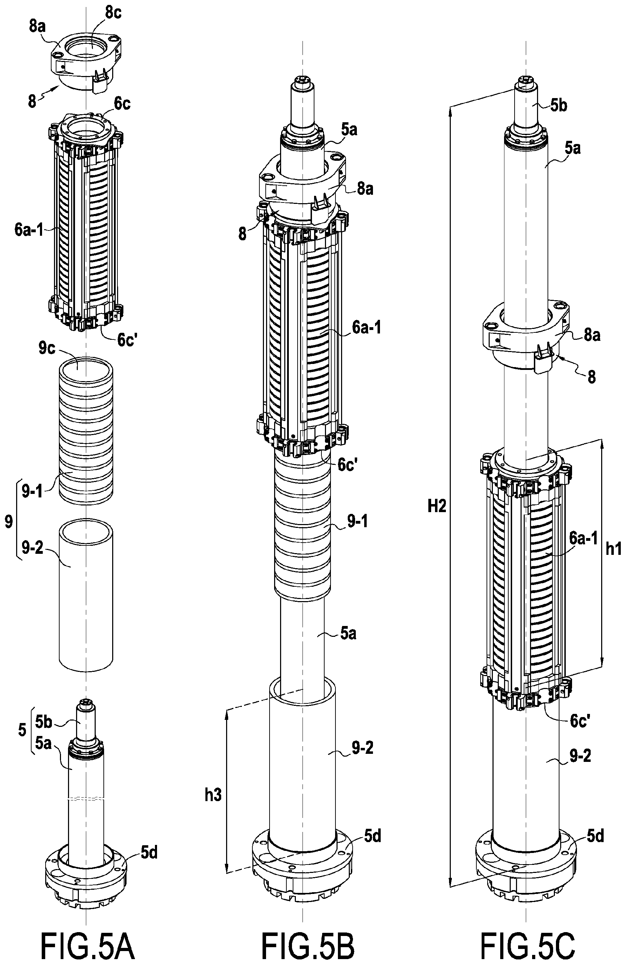

La ventouse magnétique 8 pour l'arrêt automatique du réacteur coopère avec un dispositif d'amortissement magnétique 9 dont la structure et le fonctionnement sont explicités ci-après. Le dispositif de manutention 1 selon la présente invention, comprend un dispositif magnétique amortisseur de chute 9 se composant, comme montré sur le figures 5A à 5C:
- d'un bloc inducteur 9-1 formé d'un empilement d'aimants permanents de néodyme-fer-bore solidaire d'une pièce métallique 6c' (figures 5A-5C) à l'extrémité inférieure du premier composant externe 6a-1 du premier système d'accouplement magnétique 6a présentant une forme tubulaire creuse dont la perforation centrale 9c est traversée par ladite paroi cylindrique 5a de la cloche d'étanchéité 5, et
- d'une partie induite 9-2 sous la forme d'une virole de cuivre cylindrique de plus grand diamètre que le bloc tubulaire 9-1, disposée coaxialement à l'axe longitudinal XX' et fixée sur la bride inférieure 5d de la cloche d'étanchéité 5.

En cas de chute du premier composant externe lorsque celui-ci est libéré par désactivation de la ventouse magnétique 8 comme décrit ci-dessus, le bloc aimanté 9-1 de l'amortisseur magnétique placé sous le premier composant externe 6a-1 du premier système d'accouplement linéaire se retrouve en déplacement relatif coaxial par rapport à et à l'intérieur de l'élément inférieur fixe induit 9-2.

Le déplacement relatif de la masse magnétique 9-1 par rapport à la masse de faible résistance électrique 9-2 donne naissance du fait de la variation du flux magnétique, de façon connue, à des forces de Laplace qui s'opposent au dit déplacement relatif, l'efficacité du freinage par ralentissement de la partie magnétique 9-1 en chute étant proportionnelle à sa vitesse de déplacement coaxial par rapport à la pièce métallique induite 9-2.

En pratique, dans la configuration du dispositif selon la présente invention, lors de la désactivation du verrou magnétique 8 pour créer la chute du premier composant externe 6a-1 et des éléments de l'équipement mobile qui lui sont liés magnétiquement, la pénétration de l'élément d'aimant permanent 9-1 de l'amortisseur magnétique dans la zone d'influence de l'élément conducteur 9-2 génère un freinage suffisant pour minimiser l'impact de la butée mécanique de l'extrémité inférieure du bloc d'aimant 9-1 contre la bride inférieure 5d périphérique à la base de la cloche 5 et à l'intérieur de la virole 9-2.

En pratique, la virole de cuivre 9-2 s'étend sur une hauteur h3 d'environ 600mm. La vitesse finale de l'équipement mobile avant arrêt sur butée mécanique est d'environ 0,2 m/s. Le diamètre externe maximal de la paroi cylindrique 5a de la cloche 5 est d'environ 150mm. Le diamètre interne de la virole de cuivre 9-2 est d'environ 200-250mm. Comme représenté sur la figure 5C à l'issue de la chute de l'équipement mobile de l'ensemble des composants 6a-1 et 9-1, l'extrémité inférieure 6c' du premier composant externe 6a-1 arrive juste au-dessus de l'extrémité supérieure de la virole de cuivre 9-2 après insertion de la partie inducteur aimantée 9-1 dans l'espace annulaire entre la paroi cylindrique 5a et la virole en cuivre 9-2.

Le deuxième système d'accouplement magnétique synchrone 6b commande la rotation de la barre de guidage 7 selon son axe longitudinal XX' entrainant la rotation simultanée de la tige de commande de barre 3 par rapport à son axe longitudinal XX' du fait de leur liaison glissière anti rotation relative décrite ci-dessus.

Le deuxième système d'accouplement magnétique 6b comprend, comme montré sur le figures 4A et 4B:
- un deuxième composant interne 6b-2 à section circulaire constitué d'un assemblage d'éléments de fer doux disposés côte à côte à même distance radiale de l'axe longitudinale XX' fixés coaxialement contre la partie supérieure 7-1 de la barre de guidage 7, à l'intérieur de la cloche 5, au niveau d'un compartiment supérieur à paroi cylindrique 5b de plus petit diamètre que la paroi principale cylindrique 5a, le contour de chacun des dits éléments présentant chacun une forme 6d-2 de même section d'arc de cercle, de préférence de même section d'arc de cercle, et
- un deuxième composant externe 6b-1 disposé coaxialement à l'extérieur et en vis-à-vis de la paroi cylindrique supérieure 5b de la cloche d'étanchéité 5 et en vis-à-vis du deuxième composant interne 6b-2, le dit deuxième composant externe 6b-1 étant constitué d'un assemblage d'éléments d'aimants permanents en néodyme-fer-bore séparés par des éléments de fer doux disposés côte à côte à même distance radiale de la dite paroi latérale de révolution 5b de l'enceinte, le contour de chacun des dits éléments présentant chacun une forme 6d-1 de section d'arc de cercle, de préférence de même section d'arc de cercle.

Le dit deuxième composant externe 6b-1 est monté de manière à être apte à être entrainé mécaniquement en rotation selon son axe XX' du fait qu'il est solidaire d'un pignon 6-1 entrainé en rotation par l'engrenage de pignons du deuxième train d'engrenage 2b-2 actionné par un deuxième moteur 2b-1. L'ensemble des deuxièmes moyens de rotation motorisée 2b, 2b-1, 2b-2 sont situés dans le compartiment supérieur 2 à l'extérieur de la cloche d'étanchéité 5.

Ainsi configuré, le deuxième système d'accouplement en rotation 6b ne fait pas partie de l'équipement mobile en chute gravitaire lors de l'arrêt automatique du réacteur par désactivation de la ventouse magnétique 8.

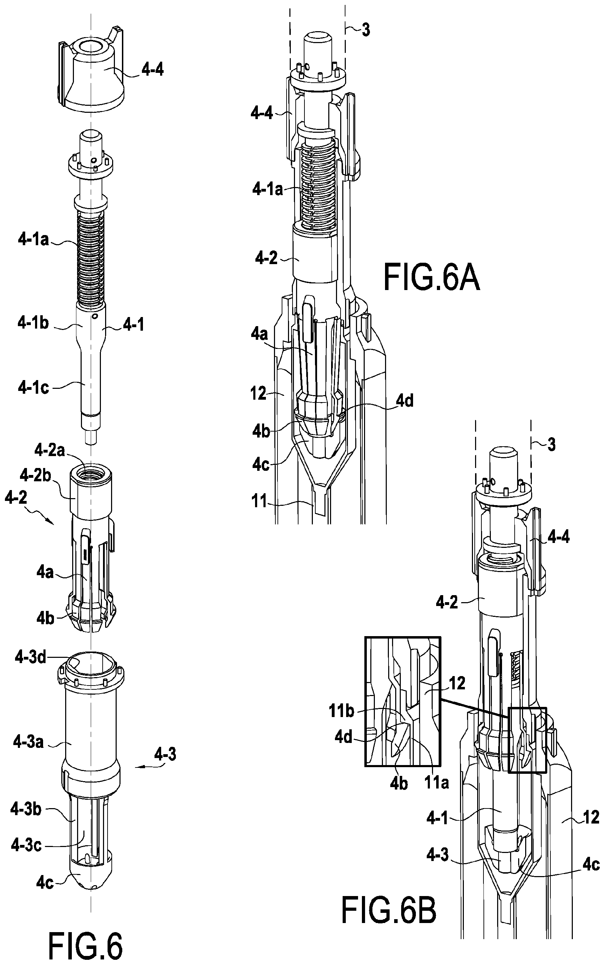

Le dispositif de préhension 4 fixé à l'extrémité inférieure de la tige de commande de barre 3 est actionnable en ouverture et en fermeture pour saisir et libérer l'extrémité supérieure 11a de la barre absorbante de contrôle 11, par rotation de la tige de commande de barre 3. Celle-ci résulte de l'actionnement du deuxième système d'accouplement en rotation 6b. Plus précisément, comme montré figure 6, le dispositif de préhension 4 comprend un premier élément 4-1 fixé à l'extrémité inférieure de la tige de commande de barre 3 comportant une partie mâle filetée 4-1a et une partie inférieure non fileté, disposée sous le filetage 4-1a, comportant une partie de plus grand diamètre 4-1b et une partie d'extrémité inférieure de plus petit diamètre 4-1c. La première partie 4-1 du préhenseur 4 est apte à coopérer par vissage avec une deuxième partie 4-2 comportant un taraudage 4-2a. La deuxième partie 4-2 supporte une pluralité de doigts longitudinaux 4a répartis régulièrement autour de l'axe longitudinal XX' de la tige de commande de barre 3 lorsque le préhenseur est monté à son extrémité inférieure, en vissant la deuxième partie 4-2 au niveau du filetage 4-1a de la première partie 4-1. L'actionnement de la rotation de la tige de commande de barre 3 entraine la rotation de la première partie 4-1 du préhenseur 4 ce qui permet, selon le sens de rotation, de faire descendre ou monter la partie femelle 4-2 dont le taraudage 4-2a coopère avec le filetage 4-1a de la première partie 4-1.

Les doigts 4a comportent chacun une extrémité inférieure de type ergot formé par un épaulement tourné vers l'extérieur 4b. Les doigts flexibles 4a sont maintenus en position rétractée au plus près de la zone de diamètre réduit 4-1c par une surface de butée inférieure d'une partie inférieure 4c d'une troisième pièce 4-3 recouvrant la deuxième pièce 4-2 coaxialement. Cette pièce 4-3 comporte une partie supérieure 4-3a tubulaire, une partie inférieure 4c de forme conique et des éléments de liaison longitudinaux intermédiaires assurant la liaison entre les parties 4-3a et 4c. Des zones ajourées 4-3c entre les éléments longitudinaux 4-3b autorisent l'expansion radiale des doigts 4a.

Deux méplats positionnés, un 4-2b sur la partie 4-2, l'autre 4-3d sur la partie 4-3 servent au blocage en rotation du 4-2 lors de translation et ainsi transforment la liaison hélicoïdale en liaison glissière.

Les doigts flexibles 4a sont maintenus en position rétractée par la dite surface de butée de la partie 4c lorsque la pièce femelle 4-2 est positionnée dans sa position la plus basse par rapport à la première pièce 4-1 au niveau du filetage 4-1a.

La rotation relative de la pièce 4-1 par rapport à la pièce 4-2 dans un sens entraine l'ascension de la pièce 4-2 vers l'extrémité supérieure du filetage 4-1a ce qui permet de dégager les ergots 4b retenus par la surface de butée 4c et d'écarter en expansion radiale les uns par rapport aux autres, les doigts 4a lorsque les ergots 4b rencontrent la surface de diamètre élargie 4-1b de la première pièce 4-1.

Une partie supérieure 4-4 du dispositif de préhension est solidaire de l'extrémité supérieure de la partie supérieure de la partie 4-3. Cette partie 4-4 comporte une forme apte à coopérer avec des encoches à l'extrémité inférieure du fourreau de guidage 3a de manière à empêcher la rotation relative de la pièce 4-3 par rapport à la tige 3.

Pour saisir la barre de contrôle 11, on insère le préhenseur 4 en position rétractée dans la cavité supérieure 11a de la barre de contrôle 11 ; puis, on procède à la rotation de la tige de commande de barre 3 de manière à engendrer la rotation de la pièce 4-1 par rapport à la pièce 4-2 laquelle étant en liaison hélicoïdale avec la pièce 4-1 est déplacée en translation verticale vers le haut de manière à ce que :
- les ergots 4b et les doigts 4a ne soient plus en appui contre la surface d'appui 4c du corps inférieur 4-3 du préhenseur 4 et se détendent en expansion radiale pour retrouver leur formes d'origine n'étant plus contraint dans la position rétractée, et
- en remontrant dans le logement interne 11a à l'extrémité supérieure des barres de contrôle 11, les ergots 4b présentent une face externe 4d qui vient coopérer avec une surface de butée périphérique 11b du logement interne 11a qui, par rotation de la tige de commande de barre 3, bloque le préhenseur 4 à l'intérieur de la cavité 11a de la partie supérieure de la barre de contrôle 11 comme montré figure 6B.

Pour désolidariser le préhenseur 4 de la barre de contrôle 11, on réalise une rotation en sens inverse qui a pour effet de redescendre la pièce 4-2 et d'en dégager les ergots 4b de la surface d'appui 11b de la barre de contrôle 11. La rotation de la tige de commande 3 entrainant la descente de la pièce 4-2 est opérée jusqu'à ce que les ergots 4b coopèrent à nouveau avec les surfaces de butée 4c de la pièce inférieure 4-3 et soient maintenus en position rétractée permettant alors de dégager le préhenseur 4 du logement supérieur 11a de la barre de contrôle 11 par translation verticale ascendante de celle-ci à l'aide du premier système d'accouplement synchrone par translation 6a.

Les doigts 4a du préhenseur 4 sont flexibles au niveau de la partie supérieure sur la pièce externe 4-2 et l'ensemble des ergots 4b aux extrémités inférieures des doigts 4a présentent une surface externe de forme conique coopérant avec une surface complémentaire conique 4c de la pièce 4-3.

Le fourreau de guidage 3a comporte un palier de guidage 3c apte à coopérer avec un dispositif de verrouillage 3b du type dispositif à baïonnette permettant le verrouillage de la tige de commande de barre 3 lorsque celle-ci est en position haute.

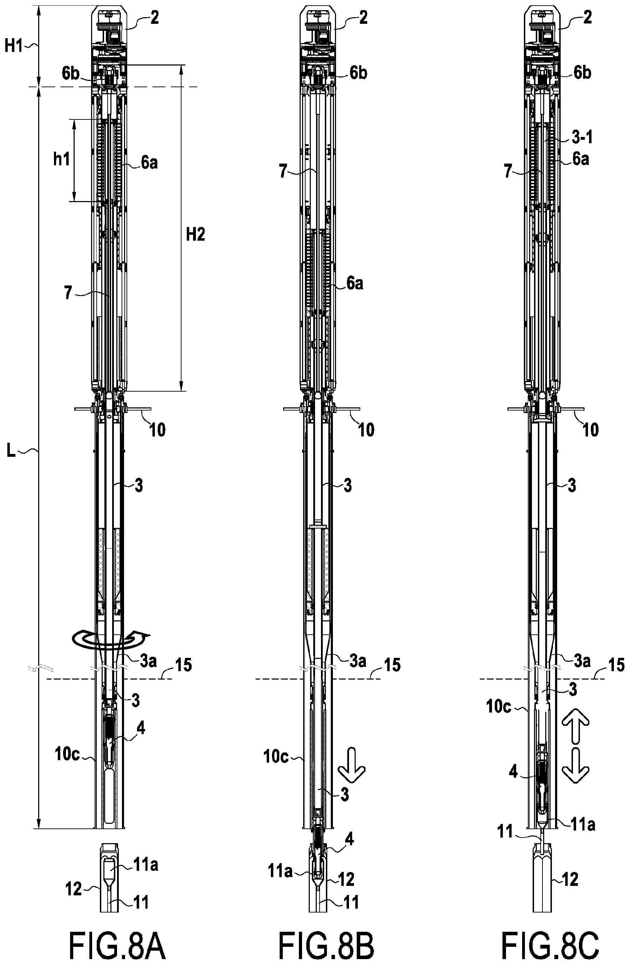

Une translation et rotation de la tige de commande de barre 3 permet de déverrouiller la tige de commande de barre 3 en position haute comme montré sur la figure 8A pour ensuite permettre sa translation verticale descendante pour saisir une barre absorbante de contrôle 11 à l'intérieur de son logement 12 représenté sur la figure 8B et réaliser une translation variable vers le haut, de ladite barre absorbante de contrôle 11 pour permettre et contrôler l'activité du réacteur comme représenté sur la figure 8C.

Le dispositif de verrouillage mécanique 3b en position haute par un système à baïonnette permet d'empêcher la chute de la tige de commande de barre 3 même en cas de coupure d'alimentation de la ventouse magnétique 8 et permet ainsi de démonter le compartiment supérieur 2 de maintenance en laissant la tige de commande de barre 3 au sein du fourreau de guidage 3a. Le dispositif de verrouillage mécanique en position haute de la tige de commande de barre comporte de façon connue des ergots de verrouillage coopérant avec des encoches dans une gorge du palier 3c à l'intérieur du fourreau de guidage lorsque la tige 3 est positionnée en rotation de manière à ce que les ergots coïncident avec les dites encoches. Une bague de sécurité permet de maintenir lesdits ergots verrouillés dans leurs encoches, ladite bague coopérant avec des ressorts de maintien et pouvant être dégagée par translation supérieure de l'ensemble lors du déverrouillage du dispositif.

Un châssis 2d constitue une structure mécanique du compartiment 2 qui supporte et guide l'ensemble des éléments de l'équipement mobile au-dessus de la dalle de fermeture 10 et sur lequel sont fixées les tôles formant la paroi du carter 2c du compartiment 2.

L'ensemble des paroi 2c du compartiment supérieur 2, paroi cylindrique 5a-5b de la cloche d'étanchéité 5, premier composant externe 6a-1 et premier composant interne 6a-2, éléments 8-1 et 8-2 de la ventouse magnétique 8 et éléments 9-1 et 9-2 du dispositif amortisseur magnétique 9 ainsi que les deuxième composant externe 6b-2 et deuxième composant interne 6b-1, fourreau de guidage 3a, tube de commande de barre 3 et barre de guidage 7 sont tous disposés coaxialement selon l'axe longitudinal vertical XX' du dispositif.

Plusieurs paliers de guidage 3d, 3e assurent le guidage axial de la tige de commande de barre 3 au sein du fourreau de guidage 3a. Le palier supérieur 3c est sous atmosphère d'argon et supporte le dispositif de verrouillage en position haute de la tige de commande de barre 3.

La fixation de la bride inférieure 5d de la cloche 5 sur une bride supérieure du manchon 10b ou du tube de guidage 3a fait par l'intermédiaire de deux joints torique d'étanchéité.

Pour écarter un risque résiduel de colmatage de l'entrefer (jeu) entre la cloche et le dit premier composant interne de l'accouplement magnétique en translation, on peut établir une contre pression d'argon à l'intérieur de la cloche 5 pour prévenir une éventuelle remontée d'aérosol de sodium et/ou chauffer cette zone à 100°C de façon à écarter les risques de dépôts solides d'aérosols à qui pourraient bloquer la translation verticale des éléments internes de l'équipement mobile à savoir le premier composant interne 6a-2 solidaire de la tige de commande de barre 3 qui se fait sans contact avec la paroi 5a et par liaison magnétique avec le premier composant externe 6a-1 du premier système d'accouplement magnétique synchrone en translation 6a.

Les motoréducteurs synchrones 2a-1 et 2b-1 associés à leur train d'engrenage respectif 2a-2 et 2b-2 coopèrent avec des capteurs de position (non représentés) qui assurent le contrôle de la translation de l'équipement mobile dans la zone de compartiment supérieur 2 à l'extérieur de la cloche 5 et de la rotation de la tige de commande de barre. Ces capteurs contrôlent notamment les positions de la partie externe 6a-1 du premier système d'accouplement magnétique 6a en translation entre des positions limite de course en translation ainsi que la position de rotation de la tige de barre entre des positions limites des pinces 4b du préhenseur 4 en position de rétractation et position d'expansion et de blocage sur des surfaces de butée 11b du logement supérieur 11a de la barre absorbante de contrôle 11.

A titre illustratif, le dispositif 1 est dimensionné comme suit :
- le diamètre externe de la paroi 2c du compartiment supérieur 2 est d'environ 350 mm ;
- le diamètre externe de la partie la plus large du fourreau de guidage est d'environ 300 mm ;
- la longueur totale L du fourreau de guidage s'étendant dessous la dalle de fermeture 10 de la cuve 13 est d'environ L= environ 10m ;
- la hauteur H1 du compartiment supérieur 2 est d'environ H1= 4 m, et
- la hauteur H2 de la cloche 5 à l'intérieur du compartiment supérieur 2 est d'environ H2= 3 m.

## Revendications

1. Dispositif de manutention (1) de barre absorbante (11) pour le contrôle d'un réacteur nucléaire, de préférence un réacteur à neutrons rapides (« RNR ») refroidi au sodium comprenant :
- un compartiment supérieur de motorisation (2) posé sur la dalle (10) de fermeture de la cuve (13) du réacteur, renfermant des moyens motorisés de transmission de commande des déplacements (2a, 2b) d'une première tige dénommée tige de commande de barre (3),
- la dite tige de commande de barre (3) s'étendant pour sa partie supérieure dans le dit compartiment supérieur de motorisation (2) et pour sa partie inférieure dans un fourreau de guidage (3a) s'étendant au sein de la dite cuve, traversant une cavité (10a) de la dalle de fermeture (10) de la cuve du réacteur, et
- un dispositif de préhension (4) de barre absorbante dénommé préhenseur fixé à l'extrémité inférieure de la dite tige de commande de barre (3), le dit préhenseur (4) étant apte à saisir l'extrémité supérieure (11a) d'une barre absorbante (11) disposée dans la prolongation de et en alignement avec la tige de commande de barre (3),
**caractérisé en ce qu'**il comprend :
- une enceinte statique de confinement étanche (5) en matériau amagnétique disposée au sein du dit compartiment supérieur, en forme de cloche, comprenant une paroi latérale de révolution (5a, 5b), de préférence cylindrique, ouverte à sa base (5c) fixée de façon étanche à la dalle de fermeture (10) de la cuve du réacteur autour de la cavité (10a) de la dite dalle de fermeture (10) traversée par le dit fourreau de guidage (3a),
- un premier système d'accouplement magnétique synchrone (6a) de transmission de mouvement de translation linéaire sans contact mécanique comprenant :
- un premier composant externe (6a-1) comprenant un bloc d'aimant(s) permanent(s), de préférence constitué d'une alternance d'aimants permanents séparés par des éléments ferromagnétiques doux, le dit bloc étant disposé au sein du dit compartiment supérieur de motorisation (2) à l'extérieur de la dite enceinte de confinement (5), et apte à être déplacé en translation verticale, et
- un premier composant interne (6a-2) comprenant au moins un élément ferromagnétique doux, disposé au sein de la dite enceinte de confinement (5), solidaire de la partie supérieure de la dite tige de commande de barre (3), la force de couplage magnétique des dit premier composant externe (6a-1) et dit premier composant interne (6a-2) permettant lorsque le premier composant externe (6a-1) est déplacé en dite translation verticale que le dit premier composant interne (6a-2) et la tige de commande de barre (3) suivent un déplacement en dite translation verticale,
- ledit compartiment de motorisation (2) comprenant des premiers moyens mécaniques motorisés de transmission de déplacements en translation verticale (2a) dudit premier composant externe (6a-1) dudit premier système d'accouplement magnétique (6a).

2. Dispositif selon la revendication 1 **caractérisé en ce qu'**il comprend:
- un dit compartiment supérieur de motorisation (2) comprenant des seconds mécaniques moyens motorisés de transmission de déplacements en rotation (2b) de la dite tige de commande de barre (3) selon son axe longitudinal (XX'); et
- un dit préhenseur (4) apte à être actionné pour saisir ou respectivement libérer l'extrémité (11a) de la dite barre de contrôle (11) par rotation de ladite tige de commande de barre (3) selon son axe longitudinal (XX').

3. Dispositif selon la revendication 2 **caractérisé en ce qu'**il comprend une deuxième tige (7) dénommée arbre de guidage, insérée dans une cavité centrale (3-1) de la partie supérieure de la dite tige de commande de barre (3) de préférence dans l'axe longitudinal de la paroi latérale de révolution (5b) de la dite enceinte de confinement étanche, la dite tige de commande (3) étant apte à coulisser par rapport au dit arbre de guidage (7) lorsqu'elle est actionnée en translation par ledit premier système d'accouplement magnétique (6a), le dit arbre de guidage étant bloqué en translation verticale et apte à être entrainé en rotation autour de son axe longitudinal (XX'), ledit arbre de guidage étant apte à coopérer avec la dite cavité centrale (3-1) de sorte que la rotation de l'arbre de guidage autour de son axe longitudinal (XX') entraine la rotation de la tige de commande de barre (3) autour de son axe longitudinal (XX').

4. Dispositif selon la revendication 3 **caractérisé en ce qu'**il comprend un deuxième système d'accouplement magnétique synchrone (6b) de transmission de mouvement de rotation sans contact mécanique comprenant :
- un deuxième composant interne (6b-2) comprenant au moins un élément ferromagnétique doux, disposé au sein de la dite enceinte de confinement étanche (5), fixe en translation verticale, apte à être déplacé en rotation selon l'axe longitudinale (XX') de la dite enceinte (5), solidaire dudit arbre de guidage (7), fixe en translation verticale, et
- un deuxième composant externe (6b-1) comprenant un bloc d'aimant(s) permanent(s), de préférence constitué d'une alternance d'aimants permanents et d'éléments ferromagnétiques doux, le dit bloc étant disposé au sein du dit compartiment supérieur de motorisation (2) à l'extérieur de la dite enceinte de confinement étanche (5), et apte à être déplacé en rotation selon l'axe longitudinal (XX') de la paroi latérale de révolution (5a) de l'enceinte de confinement étanche, et la force de couplage magnétique des dits deuxième composant externe (6b-1) et deuxième composant interne (6b-2) du dit second système d'accouplement magnétique permettant lorsque le dit second composant externe (6b-1) est déplacé en rotation que le dit deuxième composant interne (6b-2), ledit arbre de guidage (7) et la dite tige de commande de barre (3) suivent un même déplacement en dite rotation selon leur même axe longitudinale,
- ledit compartiment supérieur de motorisation (2) comprenant des seconds moyens mécaniques motorisés de transmission de déplacements en dite rotation (2b) du dit deuxième composant externe (6b-1) selon l'axe longitudinal (XX') de la paroi latérale de révolution (5a) de l'enceinte de confinement étanche, le dit compartiment supérieur (2) renfermant de préférence des moyens mécaniques de transmission de déplacement en rotation de type engrenages à pignons.

5. Dispositif selon l'une des revendications 1 à 4 **caractérisé en ce qu'**il comprend un dispositif d'arrêt d'urgence du réacteur comprenant un composant dénommé ventouse magnétique (8) comprenant un aimant permanent (8-1) combiné à une bobine électromagnétique (8-2) au sein du dit compartiment supérieur de motorisation (2) à l'extérieur de la dite enceinte de confinement étanche (5) de sorte que :
- ladite ventouse (8) est solidaire d'un support de ventouse (8a), ledit compartiment de motorisation (2) comprenant des premiers moyens motorisés de transmission (2a) de commande des déplacements en translation dudit support de ventouse ;
- l'activation électrique (8-2') de la dite bobine électromagnétique (8-2) modifie le champ magnétique (8-1') généré par l'aimant (8-1) de la dite ventouse magnétique lequel se referme sur une pièce métallique (6c) du dit premier composant externe (6a-1) du premier système d'accouplement magnétique (6a) et crée une liaison par collage magnétique entre ladite ventouse (8) et le premier composant externe (6a-1) du premier système d'accouplement magnétique assurant ainsi le déplacement en translation du dit premier composant externe (6a-1) par déplacement du dit support de ventouse (8a), et
- l'absence d'activation électrique de la dite bobine électromagnétique rétabli le champ magnétique (8-1") de l'aimant de la dite ventouse magnétique lequel champ ne se dirige plus sur ladite pièce métallique (6c) du premier composant externe du premier système d'accouplement magnétique et provoque ainsi la chute gravitaire dudit premier système d'accouplement magnétique (6a-1, 6a-2) et donc la chute gravitaire de la dite barre absorbante (11) lorsque celle-ci est saisie par le dit préhenseur (4) à l'extrémité inférieure de la tige de commande de barre.

6. Dispositif selon l'une des revendications 1 à 5 **caractérisé en ce qu'**il comprend en outre un dispositif amortisseur de chute (9) constituant un amortisseur magnétique comprenant un premier élément d'amortisseur (9-1) constitué d'un aimant permanent apte à coulisser en déplacement relatif en vis-à-vis d'un deuxième élément d'amortisseur (9-2) en matériau(x) de faible résistance électrique, de préférence en cuivre, disposé dessous le premier élément d'amortisseur (9-1), le déplacement relatif dudit premier élément d'amortisseur (9-1) par rapport audit deuxième élément d'amortisseur (9-2) intervenant lorsqu'un dispositif d'arrêt automatique (8) du réacteur autorise la chute gravitaire de la dite barre absorbante.

7. Dispositif selon la revendication 6 **caractérisé en ce que** ledit dispositif amortisseur (9) de chute constituant un amortisseur magnétique comprend:
- un deuxième élément d'amortisseur (9-2) en forme de virole, fixe, disposée coaxialement (XX') en partie basse du dit compartiment supérieur (2) à l'extérieur de la dite enceinte (5), et
- un premier élément d'amortisseur (9-1) constitué d'un aimant permanent fixé coaxialement audit premier composant externe (6a-1) dudit premier système d'accouplement magnétique (6a), apte à coulisser coaxialement à l'intérieur dudit deuxième élément d'amortisseur en forme de virole dans l'espace annulaire entre la dite virole et la paroi latérale cylindrique (5a) de la dite enceinte, lorsque le dit dispositif d'arrêt (8) automatique du réacteur autorise le lâcher dudit premier composant externe (6a-1) dudit premier système d'accouplement magnétique.

8. Dispositif selon l'une des revendications 5 à 7 **caractérisé en ce que** ledit préhenseur (4) à l'extrémité inférieure de la tige de commande de barre (3) forme un grappin comprenant une pluralité de doigts (4a) disposés dans la direction de l'axe (XX') de la tige de commande de barre en position rétractée et aptes à pivoter ou fléchir pour s'écarter angulairement de l'axe de la tige de commande de barre (3) et/ou s'expanser radialement, de manière réversible, sous l'action de rotation axiale de la tige de commande de barre (3), pour venir coopérer avec une partie supérieure (11a) de la barre absorbante (11) et s'y bloquer pour saisir la barre absorbante.

9. Dispositif selon la revendication 8 caractérisé en ce le dit préhenseur comprend au moins deux parties (4-1,4-2) coopérant l'une dans l'autre en liaison hélicoïdale par vissage avec :
- une première partie filetée (4-1) solidaire de l'extrémité de la tige de commande de barre, la dite première partie fixe male comprenant en aval de sa partie filetée (4-1a), une zone (4-1b) avec un diamètre élargi de sa section, et
- une deuxième partie taraudée (4-2) apte à se déplacer en translation par rapport à ladite première partie filetée par vissage de l'une par rapport à l'autre,
- la dite deuxième partie taraudée (4-2) supportant les dits doigts flexibles lesquels s'écartent radialement lorsqu'ils rencontrent ladite zone de diamètre élargi (4-1b) de ladite première partie du fait de la translation relative des deux dites parties filetées (4-1) et taraudée (4-2) par vissage relatif résultant de la rotation de la tige de commande de barre entrainant la rotation relative de la première partie filetée par rapport à la deuxième partie taraudée.

10. Dispositif selon l'une des revendications 1 à 9 **caractérisé en ce que** le dit premier système d'accouplement magnétique (6a) de transmission de mouvement de translation linéaire comprend :
- un premier composant externe (6a-1) constitué d'un bloc aimant permanent disposé coaxialement à la dite paroi latérale de révolution, sous forme d'un empilement de couronnes (6c) d'aimants permanents, de préférence en alliage néodyme-fer-bore, séparées par des couronnes de plaques en fer doux, et
- un premier composant interne (6a-2) disposé coaxialement à la dite paroi latérale de l'enceinte (5) et constitué d'au moins un empilement de couronnes de fer doux fixées à la partie supérieure de la tige de commande de barre (3).

11. Dispositif selon la revendication 10 **caractérisé en ce que** les deux dit premier composant interne et dit premier composant externe comprennent chacun une alternance d'aimants permanents séparés par des éléments ferromagnétiques doux.

12. Dispositif selon l'une des revendications 1 à 11 **caractérisé en ce que** le dit second système d'accouplement magnétique (6b) de transmission de mouvement en rotation comprend :
- un deuxième composant externe (6b-1) constitué d'un bloc aimant permanent annulaire disposé coaxialement à la dite paroi latérale de révolution (5b) de l'enceinte, de préférence un alliage de terre rare néodyme-fer-bore, et
- un deuxième composant interne (6b-2) constitué d'au moins un élément de fer doux fixé en partie supérieure (7-1) dudit arbre de guidage (7) disposé coaxialement à la dite paroi latérale de révolution de l'enceinte.

13. Dispositif selon la revendication 12 **caractérisé en ce que** le dit second système d'accouplement magnétique (6b) de transmission de mouvement en rotation comprend :
- un deuxième composant externe (6b-1) constitué d'un assemblage d'éléments d'aimants permanents séparés par des éléments de fer doux disposés côte à côte à même distance radiale de la dite paroi latérale de révolution (5b) de l'enceinte, le contour de chacun des dits éléments présentant chacun une forme (6d-1) de section d'arc de cercle, de préférence de même section d'arc de cercle, et
- un deuxième composant interne (6b-2) constitué d'un assemblage d'éléments de fer doux disposés côte à côte à même distance radiale de l'axe longitudinale (XX') de la partie supérieure (7-1) dudit arbre de guidage (7), le contour de chacun des dits éléments présentant chacun une forme (6d-2) de même section d'arc de cercle, de préférence de même section d'arc de cercle.

14. Procédé de manutention de barre absorbante servant au contrôle du flux neutronique émis par les assemblages combustibles (14) d'un réacteur nucléaire, de préférence du type réacteur à neutrons rapide refroidi au sodium (« RNR-Na »), par translation relative d'une barre absorbante (11) par rapport à un fourreau (12) disposé entre des barres de combustibles (14) à l'aide d'un dispositif de manutention selon l'une des revendications 1 à 13.

15. Procédé selon la revendication 14 dans lequel le dispositif de manutention est selon la revendication 5 de préférence en combinaison avec la revendication 6 ou 7 **caractérisé en ce que** l'on arrête automatiquement le réacteur par chute gravitaire libre de la tige de commande de barre et de la barre absorbante qui lui est fixée par ledit préhenseur, en coupant l'alimentation électrique d'une dite ventouse magnétique (8) et de préférence un dit dispositif amortisseur (9).

## Patentansprüche

1. Betätigungsvorrichtung (1) eines Absorberstabs (11) zur Kontrolle eines Kernreaktors, vorzugsweise eines Schnell-Neutronen-Reaktors ("RNR"), der mit Natrium gekühlt wird, umfassend:
- einen oberen Motorisierungsraum (2), der auf der Verschlussplatte (10) des Behälters (13) des Reaktors steht, der motorisierte Mittel zur Übertragung einer Steuerung der Bewegungen (2a, 2b) einer ersten Stange, Stabsteuerungsstange (3) genannt, einschließt,
- die Stabsteuerungsstange (3), die sich in ihrem oberen Teil in dem oberen Motorisierungsraum (2) und in ihrem unteren Teil in einer Führungshülse (3a) erstreckt, die sich in dem Behälter erstreckt, wobei sie durch einen Hohlraum (10a) der Verschlussplatte (10) des Behälters des Reaktors hindurchgeht, und
- eine Vorrichtung (4) zum Ergreifen des Absorberstabs, Greifer genannt, der am unteren Ende der Stabsteuerungsstange (3) befestigt ist, wobei der Greifer (4) geeignet ist, das obere Ende (11a) eines Absorberstabs (11), das in der Verlängerung und in Ausrichtung mit der Stabsteuerungsstange (3) angeordnet ist,
**dadurch gekennzeichnet, dass** sie umfasst:
- ein dichtes statisches Containment (5) aus amagnetischem Material, das in dem oberen Raum in Glockenform angeordnet ist, umfassend eine vorzugsweise zylindrische umlaufende Seitenwand (5a, 5b), die an ihrer Basis (5c) offen ist, die dicht an der Verschlussplatte (10) des Behälters des Reaktors um den Hohlraum (10a) der Verschlussplatte (10), durch die die Führungshülse (3a) hindurchgeht, befestigt ist,
- ein erstes synchrones magnetisches Kupplungssystem (6a) zur Übertragung einer linearen Translationsbewegung ohne mechanischen Kontakt, umfassend:
- eine erste externe Komponente (6a-1), umfassend einen Block von Dauermagnet(en), der vorzugsweise von einer Wechselfolge von Dauermagneten gebildet ist, die durch weiche ferromagnetische Elemente getrennt sind, wobei der Block innerhalb des oberen Motorisierungsraums (2) außerhalb des Containments (5) angeordnet und geeignet ist, in vertikaler Translation bewegt zu werden, und
- eine erste interne Komponente (6a-2), umfassend mindestens ein weiches ferromagnetisches Element, das innerhalb des Containments (5) angeordnet, mit dem oberen Teil der Stabsteuerungsstange (3) verbunden ist, wobei es die magnetische Kupplungskraft der ersten externen Komponente (6a-1) und der ersten internen Komponente (6a-2) ermöglicht, wenn die erste externe Komponente (6a-1) in vertikaler Translation bewegt wird, dass die erste interne Komponente (6a-2) und die Stabsteuerungsstange (3) eine vertikale Translationsbewegung verfolgen,
- wobei der Motorisierungsraum (2) erste motorisierte mechanische Mittel zur Übertragung von vertikalen Translationsbewegungen (2a) der ersten externen Komponente (6a-1) des ersten magnetischen Kupplungssystems (6a) umfassen.

2. Vorrichtung gemäß Anspruch 1, **dadurch gekennzeichnet, dass** sie umfasst:
- eine obere Motorisierungskammer (2), umfassend zweite motorisierte mechanische Mittel zur Übertragung von Rotationsbewegungen (2b) der Stabsteuerungsstange (3) entlang ihrer Längsachse (XX'),
- einen Greifer (4), der geeignet ist, betätigt zu werden, um das Ende (11a) des Kontrollstabs (11) durch Rotation der Stabsteuerungsstange (3) entlang ihrer Längsachse (XX') zu erfassen bzw. freizugeben.

3. Vorrichtung gemäß Anspruch 2, **dadurch gekennzeichnet, dass** sie eine zweite Stange (7), Führungswelle genannt, umfasst, die in einem zentralen Hohlraum (3-1) des oberen Teils der Stabsteuerungsstange (3) vorzugsweise in der Längsachse der umlaufenden Seitenwand (5b) des dichten Containments eingesetzt ist, wobei die Steuerungsstange (3) geeignet ist, in Bezug zur Führungswelle (7) zu gleiten, wenn sie in Translation von dem ersten magnetischen Kupplungssystem (6a) betätigt wird, wobei die Führungswelle in vertikaler Translation festgestellt und geeignet ist, in Rotation um ihre Längsachse (XX') angetrieben zu werden, wobei die Führungswelle geeignet ist, mit dem zentralen Hohlraum (3-1) zusammenzuwirken, so dass die Rotation der Führungswelle um ihre Längsachse (XX') zur Rotation der Stabsteuerungsstange (3) um ihre Längsachse (XX') führt.

4. Vorrichtung gemäß Anspruch 3, **dadurch gekennzeichnet, dass** sie ein zweites synchrones magnetisches Kupplungssystem (6b) zur Übertragung einer Rotationsbewegung ohne mechanischen Kontakt umfasst, umfassend:
- eine zweite interne Komponente (6b-2), umfassend mindestens ein weiches ferromagnetisches Element, das innerhalb des dichten Containments (5) in vertikaler Translation feststehend angeordnet und geeignet ist, in Rotation entlang der Längsachse (XX') des Containments (5), in Verbindung mit der Führungswelle (7), in vertikaler Translation feststehend, bewegt zu werden, und
- eine zweite externe Komponente (6b-1), umfassend einen Block von Dauermagnet(en), der vorzugsweise von einer Wechselfolge von Dauermagneten und weichen ferromagnetischen Elementen gebildet ist, wobei der Block innerhalb des oberen Motorisierungsraums (2) außerhalb des dichten Containments (5) angeordnet und geeignet ist, in Rotation entlang der Längsachse (XX') der umlaufenden Seitenwand (5a) des dichten Containments bewegt zu werden, und wobei es die magnetische Kupplungskraft der zweiten externen Komponente (6b-1) und zweiten internen Komponente (6b-2) des zweiten magnetischen Kupplungssystems ermöglicht, wenn die zweite externe Komponente (6b-1) in Rotation bewegt wird, dass die zweite interne Komponente (6b-2), die Führungswelle (7) und die Stabsteuerungsstange (3) eine selbe Rotationsbewegung entlang ihrer selben Längsachse verfolgen,
- den oberen Motorisierungsraum (2), umfassend zweite motorisierte mechanische Mittel zur Übertragung von Rotationsbewegungen (2b) der zweiten externen Komponente (6b-1) entlang der Längsachse (XX') der umlaufenden Seitenwand (5a) des dichten Containments, wobei der obere Raum (2) vorzugsweise mechanische Mittel zur Übertragung einer Rotationsbewegung vom Typ Zahnradgetriebe einschließt.

5. Vorrichtung gemäß einem der Ansprüche 1 bis 4, **dadurch gekennzeichnet, dass** sie eine Not-Aus-Vorrichtung für den Reaktor umfasst, umfassend eine Komponente, magnetischer Saugnapf (8) genannt, umfassend einen Dauermagneten (8-1), der mit einer elektromagnetischen Spule (8-2) innerhalb des oberen Motorisierungsraums (2) außerhalb des dichten Containments (5) kombiniert ist, so dass:
- der Saugnapf (8) mit einer Saugnapfhalterung (8a) verbunden ist, wobei der Motorisierungsraum (2) erste motorisierte Mittel (2a) zur Übertragung einer Steuerung der Translationsbewegungen der Saugnapfhalterung umfasst;
- die elektrische Aktivierung (8-2') der elektromagnetischen Spule (8-2) das Magnetfeld (8-1') verändert, das von dem Magneten (8-1) des magnetischen Saugnapfs erzeugt wird, welcher auf einem metallischen Stück (6c) der ersten externen Komponente (6a-1) des ersten magnetischen Kupplungssystems (6a) eingeschlossen ist und eine Verbindung durch magnetische Haftung zwischen dem Saugnapf (8) und der ersten externen Komponente (6a-1) des ersten magnetischen Kupplungssystems erzeugt, wodurch die Translationsbewegung der ersten externen Komponente (6a-1) durch Bewegung der Saugnapfhalterung (8a) gewährleistet ist, und
- das Fehlen einer elektrischen Aktivierung der elektromagnetischen Spule das Magnetfeld (8-1 ") des Magneten des magnetischen Saugnapfs wiederherstellt, welches Feld nicht mehr auf das metallische Stück (6c) der ersten externen Komponente des ersten magnetischen Kupplungssystems gerichtet ist und somit das schwerkraftbedingte Herabfallen des ersten magnetischen Kupplungssystems (6a-1, 6a-2) und somit das schwerkraftbedingte Herabfallen des Absorberstabs (11) hervorruft, wenn dieser von dem Greifer (4) am unteren Ende der Stabsteuerungsstange erfasst wird.

6. Vorrichtung gemäß einem der Ansprüche 1 bis 5, **dadurch gekennzeichnet, dass** sie ferner eine Falldämpfungsvorrichtung (9) umfasst, die einen magnetischen Dämpfer darstellt, umfassend ein erstes Dämpfungselement (9-1), das von einem Dauermagneten gebildet ist, der geeignet ist, in relativer Bewegung gegenüber einem zweiten Dämpfungselement (9-2) aus (einem) Material(ien) mit geringem elektrischem Widerstand, vorzugsweise aus Kupfer, das unter dem ersten Dämpfungselement (9-1) angeordnet ist, zu gleiten, wobei die relative Bewegung des ersten Dämpfungselements (9-1) in Bezug zum zweiten Dämpfungselement (9-2) stattfindet, wenn eine Vorrichtung (8) zum automatischen Ausschalten des Reaktors das schwerkraftbedingte Herabfallen des Absorberstabs gestattet.

7. Vorrichtung gemäß Anspruch 6, **dadurch gekennzeichnet, dass** die Falldämpfungsvorrichtung (9), die einen magnetischen Dämpfer darstellt, umfasst:
- ein zweites Dämpfungselement (9-2) in Form eines festen Ringes, der koaxial (XX') im unteren Teil des oberen Raums (2) außerhalb des Containments (5) angeordnet ist, und
- ein erstes Dämpfungselement (9-1), das von einem Dauermagneten gebildet ist, der koaxial an der ersten externen Komponente (6a-1) des ersten magnetischen Kupplungssystems (6a) befestigt und geeignet ist, koaxial innerhalb des zweiten Dämpfungselements in Ringform in dem ringförmigen Raum zwischen dem Ring und der zylindrischen seitenwand (5a) des Containments zu gleiten, wenn die Vorrichtung (8) zum automatischen Ausschalten des Reaktors das Loslassen der ersten externen Komponente (6a-1) von dem ersten magnetischen Kupplungssystem gestattet.

8. Vorrichtung gemäß einem der Ansprüche 5 bis 7, **dadurch gekennzeichnet, dass** der Greifer (4) am unteren Ende der Stabsteuerungsstange (3) einen Greifhaken bildet, umfassend eine Vielzahl von Fingern (4a) die in Richtung der Achse (XX') der Stabsteuerungsstange in eingezogener Position angeordnet und geeignet sind, zu schwenken oder sich zu biegen, um sich im Winkel von der Achse der Stabsteuerungsstange (3) zu entfernen und/oder sich auf reversible Weise unter der Wirkung einer axialen Rotation der Stabsteuerungsstange (3) radial auszudehnen, um mit einem oberen Teil (11 a) des Absorberstabs (11) zusammenzuwirken und sich hier festzustellen, um den Absorberstab zu erfassen.

9. Vorrichtung gemäß Anspruch 8, **dadurch gekennzeichnet, dass** der Greifer mindestens zwei Teile (4-1, 4-2) umfasst, die ineinander durch Schrauben spiralförmig verbunden zusammenwirken:
- einen ersten Teil mit Außengewinde (4-1), der mit dem Ende der Stabsteuerungsstange verbunden ist, wobei der erste feste Einsteckteil stromabwärts zu seinem Gewindeteil (4-1 a) eine Zone (4-1 b) mit einem in seinem Querschnitt erweiterten Durchmesser umfasst, und
- einen zweiten Teil mit Innengewinde (4-2), der geeignet ist, sich in Translation in Bezug zu dem ersten Teil mit Außengewinde durch Schrauben in Bezug zueinander zu bewegen,
- wobei der zweite Teil mit Innengewinde (4-2) die biegsamen Finger trägt, die sich radial entfernen, wenn sie auf die Zone mit erweitertem Durchmesser (4-1 b) des ersten Teils treffen, auf Grund der relativen Translation der zwei Teile mit Außengewinde (4-1) und Innengewinde (4-2) durch relatives Schrauben, das sich aus der Rotation der Stabsteuerungsstange, die zur relativen Rotation des ersten Teils mit Außengewinde in Bezug zum zweiten Teil mit Innengewinde führt, ergibt.

10. Vorrichtung gemäß einem der Ansprüche 1 bis 9, **dadurch gekennzeichnet, dass** das erste magnetische Kupplungssystem (6a) zur Übertragung einer linearen Translationsbewegung umfasst:
- eine erste externe Komponente (6a-1), die von einem Dauermagnetblock gebildet ist, der koaxial zu der umlaufenden Seitenwand in Form eines Stapels von Dauermagnetkränzen (6c), vorzugsweise aus Neodym-Eisen-Bor, die durch Kränze von Weicheisenplatten getrennt sind, angeordnet ist, und
- eine erste interne Komponente (6a-2), die koaxial zu der Seitenwand des Containments (5) angeordnet und von mindestens einem Stapel von Weicheisenkränzen gebildet ist, die am oberen Teil der Stabsteuerungsstange (3) befestigt sind.

11. Vorrichtung gemäß Anspruch 10, **dadurch gekennzeichnet, dass** die zwei erste interne Komponente und erste externe Komponente jeweils eine Wechselfolge von Dauermagneten umfassen, die durch weiche ferromagnetische Elemente getrennt sind.

12. Vorrichtung gemäß einem der Ansprüche 1 bis 11, **dadurch gekennzeichnet, dass** das zweite magnetische Kupplungssystem (6b) zur Übertragung einer Rotationsbewegung umfasst:
- eine zweite externe Komponente (6b-1), die von einem ringförmigen Dauermagnetblock gebildet ist, der koaxial zur umlaufenden Seitenwand (5b) des Containments angeordnet ist, vorzugsweise aus einer Seltenerd-Legierung Neodym-Eisen-Bor, und
- eine zweite interne Komponente (6b-2), die von mindestens einem Weicheisenelement gebildet ist, das im oberen Teil (7-1) der Führungswelle (7) befestigt ist, die koaxial zur umlaufenden Seitenwand des Containments angeordnet ist.

13. Vorrichtung gemäß Anspruch 12, **dadurch gekennzeichnet, dass** das zweite magnetische Kupplungssystem (6b) zur Übertragung einer Rotationsbewegung umfasst:
- eine zweite externe Komponente (6b-1), die von einer Zusammenfügung von Dauermagnetelementen gebildet ist, die durch Weicheisenelemente getrennt sind, die nebeneinander in einem selben Radialabstand zu der umlaufenden Seitenwand (5b) des Containments angeordnet sind, wobei die Kontur jedes der Elemente jeweils eine Form (6d-1) eines Kreisbogenabschnitts, vorzugsweise eines selben Kreisbogenabschnitts, aufweist, und
- eine zweite interne Komponente (6b-2), die von einer Zusammenfügung von Weicheisenelementen gebildet ist, die nebeneinander in einem selben Radialabstand zu der Längsachse (XX') des oberen Teils (7-1) der Führungswelle (7) angeordnet sind, wobei die Kontur jedes der Elemente jeweils eine Form (6d-2) eines Kreisbogenabschnitts, vorzugsweise eines selben Kreisbogenabschnitts, aufweist.

14. Verfahren zur Betätigung eines Absorberstabs, der zur Kontrolle des Neutronenstroms, der von den Brennelementen (14) eines Kernreaktors, vorzugsweise vom Typ Schnell-Neutronen-Reaktor, der mit Natrium gekühlt ist, ("RNR-Na"), entsandt wird, durch relative Translation eines Absorberstabs (11) in Bezug zu einer Hülse (12), die zwischen Brennstäben (14) angeordnet ist, mit Hilfe einer Betätigungsvorrichtung gemäß einem der Ansprüche 1 bis 13.

15. Verfahren gemäß Anspruch 14, bei dem die Betätigungsvorrichtung gemäß Anspruch 5, vorzugsweise in Kombination mit Anspruch 6 oder 7, ausgeführt ist, **dadurch gekennzeichnet, dass** der Reaktor durch freies schwerkraftbedingtes Herabfallen der Stabsteuerungsstange und des Absorberstabs, der an ihr durch den Greifer befestigt ist, automatisch ausgeschaltet wird, wobei die Stromversorgung eines magnetischen Saugnapfs (8) und vorzugsweise einer Dämpfungsvorrichtung (9) unterbrochen wird.

## Claims

1. A device (1) for handling an absorbent rod (11) for controlling a nuclear reactor, preferably a sodium-cooled fast-neutron reactor (FNR), comprising:
- an upper motor compartment (2) positioned on the closing slab (10) of the reactor vat (13), enclosing motorized means (2a, 2b) for transmitting control for the displacements of a first stem known as the rod control stem (3),
- said rod control stem (3) with its upper part extending in said motor compartment (2) and its lower part extending in a guide sheath (3a) extending inside said vat, crossing a cavity (10a) of the closing slab (10) of the reactor vat, and
- a device (4) for gripping absorbent rod known as a gripper fastened to the lower end of said rod control stem (3), said gripper (4) being able to seize the upper end (11a) of an absorbent rod (11) arranged in the extension of and in alignment with the rod control stem (3),
**characterized in that** it comprises:
- a sealed static confinement chamber (5) made of non-magnetic material arranged inside said upper compartment, in the form of a shroud, comprising a side wall of revolution (5a, 5b), preferably cylindrical, open at its base (5c) fastened in a sealed manner to the closing slab (10) of the reactor vat around the cavity (10a) of said closing slab (10) crossed by said guide sheath (3a),
- a first synchronous magnetic coupling system (6a) for transmitting linear translational movement without mechanical contact, comprising:
- a first outer component (6a-1) comprising a block of permanent magnet(s), preferably consisting of alternating permanent magnets separated by soft ferromagnetic elements, said block being arranged inside said upper motor compartment (2) outside said confinement chamber (5), and able to be vertically translated, and
- a first inner component (6a-2) comprising at least one soft ferromagnetic element, arranged inside said confinement chamber (5), integral with the upper part of said rod control stem (3), the magnetic coupling force of said first outer component (6a-1) and said first inner component (6a-2) making it possible, when the first outer component (6a-1) is displaced in vertical translation, for said first inner component (6a-2) and the rod control stem (3) to follow a displacement in said vertical translation,
- said motor compartment (2) comprising first motorized mechanical means for transmitting vertical translational displacements (2a) of said first outer component (6a-1) of said first magnetic coupling system. (6a).

2. The device according to claim 1 **characterized in that** it comprises:
- a said upper motor compartment (2) comprising second motorized mechanical means (2b) for transmitting rotational displacements of said rod control stem (3) along its longitudinal axis (XX'); and
- a said gripper (4) able to be actuated to respectively seize or release the end (11a) of said control rod (11) by rotation of said rod control stem (3) along its longitudinal axis (XX').

3. The device according to claim 2 **characterized in that** it comprises a second stem (7) known as the guide shaft, inserted into a center cavity (3-1) of the upper part of said rod control stem (3) preferably in the longitudinal axis of the side wall of revolution (5b) of said sealed confinement chamber, said control stem (3) being able to slide with respect to said guide shaft (7) when it is translationally actuated by said first magnetic coupling system (6a), said guide shaft being blocked in vertical translation and able to be rotationally driven about its longitudinal axis (XX'), said guide shaft being able to cooperate with said center cavity (3-1) so that the rotation of the guide shaft about its longitudinal axis (XX') drives the rotation of the rod control stem (3) about its longitudinal axis (XX').

4. The device according to claim 3 **characterized in that** it comprises a second synchronous magnetic coupling system (6b) for transmitting rotational movement without mechanical contact comprising:
- a second inner component (6b-2) comprising at least one soft ferromagnetic element, arranged inside said sealed confinement chamber (5), fixed in vertical translation, able to be rotationally displaced along the longitudinal axis (XX') of said chamber (5), integral with said guide shaft (7), fixed in vertical translation, and
- a second outer component (6b-1) comprising a block of permanent magnet(s), preferably consisting of alternating permanent magnets and soft ferromagnetic elements, said block being arranged inside said upper motor compartment (2) outside said sealed confinement chamber (5), and able to be rotationally displaced along the longitudinal axis (XX') of the side wall of revolution (5a) of the sealed confinement chamber, and the magnetic coupling force of said second outer component (6b-1) and said second inner component (6b-2) of said second magnetic coupling system making it possible, when said second outer component (6b-1) is rotationally displaced, for said second inner component (6b-2), said guide shaft (7) and said rod control stem (3) follow a same displacement in said rotation along their same longitudinal axis,
- said upper motor compartment (2) comprising second motorized mechanical means (2b) for transmitting displacements in said rotation of said second outer component (6b-1) along the longitudinal axis (XX') of the side wall of revolution (5a) of the sealed confinement chamber, said upper compartment (2) preferably enclosing mechanical means for transmitting rotational displacement of pinion gear type.

5. The device according to one of claims 1 to 4 **characterized in that** it comprises a device for emergency shutdown of the reactor comprising a component known as a magnetic suction cup (8) comprising a permanent magnet (8-1) combined with an electromagnetic coil (8-2) inside said upper motor compartment (2) outside said sealed confinement chamber (5) so that:
- said suction cup (8) is integral with a suction cup base (8a), said motor compartment (2) comprising first motorized mechanical means (2a) for transmitting control for translational displacements of said suction cup base;
- the electrical activation (8-2') of said electromagnetic coil (8-2) modifies the magnetic field (8-1') generated by the magnet (8-1) of said magnetic suction cup which closes on a metal part (6c) of said first outer component (6a-1) of the first magnetic coupling system (6a) and creates a link by magnetic bonding between said suction cup (8) and the first outer component (6a-1) of the first magnetic coupling system thus providing the translational displacement of said first outer component (6a-1) by displacement of said suction cup base (8a), and
- the absence of electrical activation of said electromagnetic coil re-establishes the magnetic field (8-1") of the magnet of said magnetic suction cup which field is no longer directed onto said metal part (6c) of the first outer component of the first magnetic coupling system and thus causes the gravitational fall of said first magnetic coupling system (6a-1, 6a-2) and therefore the gravitational fall of said absorbent rod (11) when the latter is seized by said gripper (4) at the lower end of the rod control stem.

6. The device according to one of claims 1 to 5 **characterized in that** it further comprises a fall damping device (9) constituting a magnetic damper comprising a first damper element (9-1) consisting of a permanent magnet able to slide in relative displacement facing a second damper element (9-2) made of materials of low electrical resistance, preferably copper, arranged under the first damper element (9-1), the relative displacement of said first damper element (9-1) with respect to said second damper element (9-2) occurring when a device (8) for automatic shutdown of the reactor permits the gravitational fall of said absorbent rod.

7. The device according to claim 6 **characterized in that** said fall damping device (9) constituting a magnetic damper comprises:
- a second damper element (9-2) in the shape of a ferrule, fixed, coaxially arranged (XX') in the bottom part of said upper compartment (2) outside said chamber (5), and
- a first damper element (9-1) consisting of a permanent magnet coaxially fastened to said first outer component (6a-1) of said first magnetic coupling system (6a), able to slide coaxially inside said ferrule-shaped second damper element in the annular space between said ferrule and the cylindrical side wall (5a) of said chamber, when said device (8) for automatic shutdown of the reactor permits the release of said first outer component (6a-1) of said first magnetic coupling system.

8. The device according to one of claims 5 to 7 **characterized in that** said gripper (4) at the lower end of the rod control stem (3) forms a grab comprising a plurality of fingers (4a) arranged in the direction of the axis (XX') of the rod control stem in the retracted position and able to pivot or bend to move angularly away from the axis of the rod control stem (3) and/or expand radially, reversibly, under the action of axial rotation of the rod control stem (3), to cooperate with the upper part (11a) of the absorbent rod (11) and block itself there to seize the absorbent rod.

9. The device according to claim 8 **characterized in that** said gripper comprises at least two parts (4-1, 4-2) cooperating with one another in a helical connection by screwing with:
- a first threaded part (4-1) integral with the end of the rod control stem, said first male fixed part comprising downstream of its threaded part (4-1a), an area (4-1b) with a widened cross section diameter, and
- a second tapped part (4-2) able to be translationally displaced with respect to said first threaded part by screwing one with respect to the other,
- said second tapped part (4-2) bearing said flexible fingers which move apart radially when they encounter said area of widened diameter (4-1b) of said first part due to the relative translation of the two said threaded (4-1) and tapped (4-2) parts by relative screwing resulting from the rotation of the rod control stem driving the relative rotation of the first threaded part with respect to the second tapped part.

10. The device according to one of claims 1 to 9 **characterized in that** said first magnetic coupling system (6a) for transmitting linear translational movement comprises:
- a first outer component (6a-1) consisting of a block of permanent magnet coaxially arranged to said side wall of revolution, in the form of a stack of permanent magnet rings (6c), preferably of neodymium-iron-boron alloy, separated by rings of soft iron plates, and
- a first inner component (6a-2) coaxially arranged with said side wall of the chamber (5) and consisting of at least a stack of soft iron rings fastened to the upper part of the rod control stem (3).

11. The device according to claim 10 **characterized in that** both said first inner component and said first outer component each comprise alternating permanent magnets separated by soft ferromagnetic elements.

12. The device according to one of claims 1 to 11 **characterized in that** said second magnetic coupling system (6b) for transmitting rotational movement comprises:
- a second outer component (6b-1) consisting of an annular block of permanent magnet coaxially arranged with said side wall of revolution (5b) of the chamber, preferably a neodymium-iron-boron rare earth alloy, and
- a second inner component (6b-2) consisting of at least a soft iron element fastened to the upper part (7-1) of said guide shaft (7) coaxially arranged with said side wall of revolution of the chamber.

13. The device according to claim 12 **characterized in that** said second magnetic coupling system (6b) for transmitting rotational movement comprises:
- a second outer component (6b-1) consisting of an assembly of permanent magnets separated by soft iron elements arranged side-by-side at a same radial distance from said side wall of revolution (5b) of the chamber, the outline of each of said elements each having a shape (6d-1) of a circular arc section, preferably the same circular arc section, and
- a second inner component (6b-2) consisting of an assembly of soft iron elements arranged side-by-side at the same radial distance from the longitudinal axis (XX') of the upper part (7-1) of said guide shaft (7), the outline of each of said elements each having a shape (6d-2) of the same circular arc section, preferably the same circular arc section.

14. A method for handling an absorbent rod used to control the neutron flow emitted by the fuel assemblies (14) of a nuclear reactor, preferably of the sodium-cooled fast-neutron reactor type (FNR-Na), by relative translation of an absorbent rod (11) with respect to a sheath (12) arranged between fuel rods (14) using a handling device according to one of claims 1 to 13.

15. The method according to claim 14 wherein the handling device is according to claim 5 preferably in combination with claim 6 or 7 **characterized in that** the reactor is automatically shut down by free gravitational fall of the rod control stem and of the absorbent rod that is fastened thereto by said gripper, by cutting the electrical power supply of a said magnetic suction cup (8) and preferably a said magnetic damper device (9).
